(19) Europäisches Patentamt
European Patent Office
Office européen des brevets

(11) **EP 4 283 121 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **22174828.8**

(22) Anmeldetag: **23.05.2022**

(51) Internationale Patentklassifikation (IPC):
*F04B 23/02* (2006.01)  *F04B 49/06* (2006.01)
*F04B 49/10* (2006.01)  *F04B 51/00* (2006.01)
*B60S 3/04* (2006.01)

(52) Gemeinsame Patentklassifikation (CPC):
**F04B 23/02; F04B 49/06; F04B 49/065;**
**F04B 49/106; F04B 51/00;** F04B 2205/064;
F04B 2205/09

(54) **DOSIERPUMPE FÜR FAHRZEUGWASCHANLAGEN**

DOSING PUMP FOR VEHICLE WASHING INSTALLATIONS

POMPE DE DOSAGE POUR INSTALLATION DE LAVAGE DES VÉHICULES

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Veröffentlichungstag der Anmeldung:
**29.11.2023 Patentblatt 2023/48**

(73) Patentinhaber: **WashTec Holding GmbH**
**86153 Augsburg (DE)**

(72) Erfinder:
• **MAYER, Stefan**
**86356 Neusäß (DE)**
• **SATTLER, Andreas**
**81543 München (DE)**
• **STECHER, David**
**86653 Monheim (DE)**

(74) Vertreter: **Schwarz, Claudia**
**Schwarz + Kollegen**
**Patentanwälte**
**Heilmannstraße 19**
**81479 München (DE)**

(56) Entgegenhaltungen:
**EP-A1- 3 896 457**  **WO-A1-2019/162226**
**DE-A1- 102017 121 172**  **DE-U1- 202012 103 143**

**Beschreibung**

Die vorliegende Erfindung betrifft ein Verfahren, eine Recheneinheit, ein Computerprogramm zur computer-implementierten Ermittlung eines IST-Fördervolumens für eine Dosierpumpe, die in einer Fahrzeugwaschanlage verwendet wird, die Verwendung eines solchen Verfahrens zur automatischen Kalibrierung einer Dosierpumpe, eine Recheneinheit, die zur Ausführung des Verfahrens bestimmt ist, ein Dosiersystem, eine Fahrzeugwaschanlage mit einem Dosiersystem und ein Computerprogrammprodukt.

Zur Wäsche von Fahrzeugen sind Waschanlagen bekannt, die z.B. als Portalwaschanlagen oder Waschstraßen betrieben werden können. Diese Waschanlagen weisen eine Vielzahl von Arbeitsaggregaten auf, die - je nach Waschprogramm - betrieben werden müssen. Die Arbeitsaggregate sind zum Teil ausgebildet, Waschsubstanzen, wie z.B. Detergenzien oder Substanzen, die im Reinigungsprozess verwendet werden, wie z.B. Trocknungshilfen (im Folgenden kurz "Substanz" genannt) auf die Fahrzeugoberfläche zu applizieren. Diese unter dem Begriff Substanzen zusammengefassten Mittel können in unterschiedlichen Aggregatzuständen bereitgestellt werden, beispielsweise als Fluid, das in einem Behälter von einem Lieferanten bereitgestellt wird. Zur Förderung der Substanz kann eine Dosierpumpe verwendet werden, um die Substanz aus dem Behälter derart zu fördern, so dass die gewünschte Anwendungskonzentration der Substanz erzielt werden kann. Die Substanz kann direkt in das Arbeitsaggregat der Waschanlage oder in einen Mischer oder in einem Zuführsystem (z.B. Schlauchsystem oder Leitungssystem) gefördert werden.

Das Dokument WO 2019/162226 A1 beschreibt ein Verfahren zum Betreiben einer Fahrzeugwaschanlage, indem ein an einem Transportbehälter für eine Waschsubstanz angebrachter optischer Code mittels eines mobilen Geräts gescannt wird, um Steuerdaten für die Fahrzeugwaschanlage zu ermitteln.

Das Dokument DE 20 2012 103143 U1 beschreibt eine Dosiervorrichtung mit einem austauschbaren Vorratsbehälter, einem integrierten Vorratstank und einer Dosierpumpe, in denen ein Zusatzmittel für eine Behandlungsflüssigkeit für eine Fahrzeugbehandlungsanlage vorrätig gehalten bzw. gefördert wird. Ein Füllstandsmessgerät ist in einem oberen Bereich des Vorratstanks angeordnet, oder ein Durchflussmessgerät an der Auslassöffnung des Vorratsbehälters.

Aus der EP 2 885 169 B1 ist eine Dosiervorrichtung (Dosierpumpe) bekannt, die fluidmechanisch an ein Behältersystem gekoppelt ist, das einen ersten austauschbaren Vorratsbehälter aufweist, der nicht nachfüllbar ist und der dem Waschanlagenbetreiber vorbefüllt von einem Chemielieferanten bereitgestellt wird. Dieser erste austauschbare Vorratsbehälter kann an einen zweiten Behälter, einen fest integrierten Vorratstank, angeschlossen werden, um diesen über eine Einlassöffnung mit der Substanz zu versorgen. Dieser Vorratstank hat eine feste Form und Größe und ist nicht austauschbar und kann nur durch die fluidmechanische Kopplung an den ersten Vorratsbehälter befüllt werden und ist ansonsten nicht nachfüllbar bzw. weist keine Nachfüllöffnung auf. Der Vorratstank dient sozusagen als Puffer und speist eine Dosierpumpe.

Dieses System erweist sich als nachteilig, da der Waschanlagenbetreiber auf die festen Behältergrößen und/oder Formen festgelegt ist. Möchte er beispielsweise den Chemielieferanten wechseln, kann dies bauliche Anpassungen am Dosiersystem erfordern.

Ein bekanntes Problem von (z.B. pneumatischen) Dosierpumpen, insbesondere mit manueller Hubverstellung ist, dass sie durch Fertigungstoleranzen mit kleiner werdender Dosiereinstellung zunehmend ungenauer werden. Um eine Abschätzung zu treffen, wie viel die Dosierpumpe tatsächlich in ihrem aktuellen Betriebspunkt (bei bekanntem Einstellwert eines Einstellmittels und bekanntem Hub) fördert, bedient man sich eines manuellen Nachmessvorganges mit einem Messzylinder (auch "Auslitern" genannt). Dies dient dazu, einen Anhaltswert zu haben, wie hoch die tatsächliche aktuelle Fördermenge oder Förderleistung der Dosierpumpe der jeweiligen Substanz ist. Diese Vorgehensweise ist zeitintensiv und verursacht kostenintensive Messaktivitäten. Wünschenswert ist es deshalb, ein Dosiersystem zu schaffen, bei dem das manuelle Auslitern zur Kalibrierung der Dosierpumpe vermieden werden kann.

Der Chemieverbrauch kann sich von Fahrzeugwäsche zu Fahrzeugwäsche unterscheiden, je nachdem wie lang und/oder wie hoch das Fahrzeug ist. Weiterhin verursachen unterschiedliche Waschprogramme unterschiedliche Verbräuche der chemischen Substanzen. Es besteht deshalb - unter anderem zu Diagnosezwecken - ein Bedarf, Kenntnis über die tatsächlich dosierte Menge an Substanzen zu haben.

Die vorliegende Erfindung hat sich deshalb zur Aufgabe gestellt, eine Möglichkeit zu schaffen, wie die tatsächliche Förderleistung einer Dosierpumpe mit einer manuellen Hubeinstellung exakt ermittelt werden kann, um diese automatisch kalibrieren zu können. Es sollen "einfache" Dosierpumpen verwendbar sein, die lediglich fluidmechanische Anschlüsse (keine elektronischen) aufweisen und/oder nicht elektrisch angesteuert oder nicht elektrisch geregelt werden. Weiterhin soll die Qualität des Waschvorganges verbessert und der Verbrauch an zuzuführenden Substanzen verringert werden. Zudem soll das Verfahren dazu beitragen, die Kosten bei der Inbetriebnahme und während des Betriebs der Waschanlage zu senken.

Diese Aufgabe wird durch die beiliegenden Patentansprüche, insbesondere durch ein computer-implementiertes Verfahren, eine Recheneinheit, ein Dosiersystem und ein Computerprogramm gelöst. Vorteilhafte Ausführungsform der Erfindung finden sich in der nachfolgenden Beschreibung und/oder in den Unteransprüchen.

In einem ersten Aspekt betrifft die vorliegende Erfindung ein computer-implementiertes Verfahren zur Ermittlung eines IST-Fördervolumens für eine Dosierpumpe. Insbesondere kann als Dosierpumpe eine pneumatischen Dosierpumpe vorgesehen sein. Die Dosierpumpe ist zur Förderung einer Substanz aus einem Behälter bestimmt. Ferner ist die Dosierpumpe mit einem Einstellmittel zur manuellen Einstellung eines SOLL-Fördervolumens (Förderleistung) ausgebildet. Die Dosierpumpe ist zur Verwendung in einer Fahrzeugwaschanlage vorgesehen oder bestimmt

Das Verfahren gemäß dem ersten Aspekt weist folgende Verfahrensschritte auf:
In einem ersten Schritt erfolgt ein Einlesen eines Behälterdatensatzes für den Behälter, aus dem die Dosierpumpe die Substanz fördern soll. Dies erfolgt vorzugsweise nur einmalig pro Behälter oder Behältertyp.

In einem weiteren Verfahrensschritt erfolgt ein Einlesen eines digitalen Füllstandwertes. Der digitale Füllstandwert repräsentiert eine Füllstandsdifferenz zwischen zwei Zeitpunkten bzw. eine Differenz zwischen zwei Füllständen, die zu zwei unterschiedlichen Zeitpunkten erfasst wurden. So kann der digitale Füllstandwert beispielsweise eine Füllstanddifferenz zwischen einem ersten Zeitpunkt und einem zweiten Zeitpunkt repräsentieren, an denen der Füllstand jeweils gemessen wurde. "fs1" kann z.B. den ersten Füllstand zum ersten Zeitpunkt t1 und "fs2" den zweiten Füllstand zum zweiten Zeitpunkt t2 bezeichnen. Der digitale Füllstandwert umfasst somit zumindest zwei Füllstandwerte zur Differenzbestimmung, die in oder an dem Behälter mittels zumindest einem analogen Füllstandsensor zu jeweils einem Zeitpunkt gemessen wurden. Der Füllstand kann kontinuierlich in einem konfigurierbaren Messzeitraum gemessen werden.

Alternativ oder kumulativ zum vorherigen Verfahrensschritt kann in einem weiteren Verfahrensschritt ein Einlesen eines digitalen Druckwertes erfolgen. Der digitale Druckwert repräsentiert eine in dem Behälter mittels zumindest einem analogen Drucksensor gemessene Druckdifferenz zwischen zwei Zeitpunkten. Ferner umfasst dieser Verfahrensschritt ein Einlesen eines Dichtewertes für die mit der Dosierpumpe zu fördernde Substanz. Das Messen des Drucks und das Einlesen oder Bestimmen der Dichte kann kontinuierlich in einem konfigurierbaren Messzeitraum erfolgen.

In einem weiteren Verfahrensschritt erfolgt (für beide Varianten, die auch kombinierbar sind) ein Ermitteln und Ausgeben eines IST-Fördervolumens, welches von der Dosierpumpe in einem Messzeitintervall tatsächlich gefördert worden ist. Das Ermitteln des IST-Fördervolumens kann auf Basis des (bzw. in Antwort auf den) digitalen Füllstandwertes und auf Basis des eingelesenen Behälterdatensatzes erfolgen. Alternativ oder kumulativ kann das Ermitteln des IST-Fördervolumens auf Basis des oder in Antwort auf den digitalen Druckwert/es und des eingelesenen Dichtewertes und auf Basis des eingelesenen Behälterdatensatzes erfolgen. Das Ermitteln des IST-Fördervolumens kann bei Bedarf aktiviert (bzw. deaktiviert) werden, insbesondere z.B. zur Kalibrierung der Dosierpumpe für einen Behälter.

Das computer-implementierte Verfahren zur Ermittlung eines IST-Fördervolumens kann grundsätzlich für eine Dosierpumpe betrieben werden und/oder auf einer Recheneinheit ausgeführt werden, die in Datenaustausch mit der Dosierpumpe steht und/oder die über eine Mensch-Maschine-Schnittstelle verfügt. Das computer-implementierte Verfahren zur Ermittlung eines IST-Fördervolumens kann auch lokal auf einer Recheneinheit von einer Dosierpumpe ausgeführt werden.

Mit der vorliegenden Erfindung kann das tatsächliche IST-Fördervolumen der Dosierpumpe ermittelt werden, womit sich Vorteile bei der Qualität und u.a. im Bereich der Prognose des Verbrauchs und somit eine effiziente Zufuhr von benötigten Substanzen ergeben. Weiterhin kann das ermittelte IST-Fördervolumen zu Diagnosezwecken in der Fahrzeugwaschanlage und zur spezifischen und verbrauchsbasierten Berechnung von Gebühren bzw. Preisen herangezogen werden, um auf die Wirtschaftlichkeit und/oder die Funktionsfähigkeit Rückschlüsse zu ziehen.

Weiterhin hat es sich als vorteilhaft erwiesen, dass die Anzahl von Hüben der Dosierpumpe kontinuierlich miterfasst und gespeichert wird, insbesondere auf zugeordnete Weise zu den gemessenen Werten (gemessener Füllstand und/oder gemessener Druck und eingelesene Dichte). Dadurch wird es möglich, das ermittelte IST-Fördervolumen pro Hub (als Hubvolumen) zu bestimmen. Damit wird eine wesentlich feinere bzw. genauere Aussage über den Verbrauch der Substanz möglich. Das Ermitteln des IST-Fördervolumens ist grundsätzlich ab einer einstellbaren Minimalanzahl von Hüben und damit ab einem einstellbaren Minimalfördervolumen möglich. Je höher diese Minimalzahl eingestellt bzw. gewählt wird, desto genauer ist die Ermittlung des IST-Fördervolumens. Anschließend kann das Ermitteln des IST-Fördervolumens kontinuierlich, zyklisch oder nach konfigurierbaren Ereignissen (z.B. voreingestellte Zeitintervalle, Behälterwechsel) automatisch aktiviert werden.

Im Sinne der vorliegenden Erfindung ist unter der Dosierpumpe eine durch ein Medium angetriebene Dosierpumpe zu verstehen. Dosierpumpen sind im Stand der Technik unter anderem als Verdrängerpumpen bekannt. Dosierpumpen liefern unabhängig von den Druckverhältnissen an einem Eingang und einem Ausgang der Dosierpumpe ein definiertes Volumen pro Umdrehung, Hub und/oder Zeit. Die Dosierpumpe verfügt vorzugsweise über eine manuelle Einstellmöglichkeit des Soll-Fördervolumens. Die Dosierpumpe weist keine elektronischen oder elektromechanischen Elemente zur Steuerung/Bedienung auf. Die vorgesehene Dosierpumpe weist lediglich mechanische Anschlüsse (Eingang/Ausgang) auf, zum fluidmechanischen Verbinden der Dosierpumpe insbesondere mit einem Behälter. Aus dem Behälter kann unter Verwendung der zuvor genannten Dosierpumpe eine Substanz gefördert werden und einem Arbeitsaggregat oder Betriebsmittel der Fahrzeugwaschanlage z.B. über eine Leitung bereitgestellt werden. Als Dosierpumpe kann bspw. eine Hubkolbenpumpe vorgesehen werden. Weitere Dosierpumpen, wie z.B. Schlauchpumpen, Membranpumpen, Zahnradpumpen oder andere Verdrängerpumpen können ebenfalls vorgesehen werden.

Die Energiezuführung zum Betreiben der Dosierpumpe erfolgt über Druckluft (pneumatisch) oder unter Verwendung von Wasser. Die Taktung erfolgt über eine Ventilanordnung, die in der Fahrzeugwaschanlage angeordnet sein kann. Die Taktung ist nur bedingt variierbar. Die Förderleistung der Dosierpumpe kann deshalb hauptsächlich über die mechanische Verstellung des Einstellmittels (z.B. ein Einstellrad und insbesondere Drehrad an der Dosierpumpe) zur Einstellung des Hubweges gesteuert werden. Über das Einstellmittel kann insbesondere der Hubweg und somit die Bewegung des Hubkolbens verstellt werden. Das Einstellmittel kann von wenigstens einer ersten Position in wenigstens eine zweite Position und/oder umgekehrt mittels wenigstens einer manuellen Betätigung verstellt werden. Das Einstellmittel ist vorzugsweise direkt an der Dosierpumpe angeordnet.

Alternativ kann es sich bei der Dosierpumpe um eine elektrisch angesteuerte Dosierpumpe handeln, die zur Ansteuerung und Überwachung mit einem Digital- und/oder Analogeingang ausgebildet sein kann. Über die genannten Eingänge kann die Dosierpumpe von einer Steuereinheit angesprochen und gesteuert werden. Die Förderleistung der Dosierpumpe kann über eine durch die Steuereinheit bereitgestellte Hubfrequenzänderung eingestellt werden. Die Dosierpumpe kann ferner über einen elektronischen Eingang zum Bereitstellen von Statusinformation aufweisen. Beispielsweise können Informationen zur Überwachung des Füllstandes im Behälter bereitgestellt werden.

Im Sinne der vorliegenden Erfindung ist die Fahrzeugwaschanlage (auch kurz Waschanlage) zur Reinigung von Fahrzeugen, insbesondere nicht-schienengebundenen Kraftfahrzeugen ausgebildet. Es kann sich um eine Waschstraße oder um eine Portalwaschanlage handeln. Alternativ kann es sich bei der Waschanlage auch um eine Selbstbedienungswaschanlage handeln, bei der der Anwender handbetätigte Arbeitsgeräte nutzt, um sein Fahrzeug selbst zu reinigen oder um eine Waschanlage für Nutzfahrzeuge handeln. Diese unterschiedlichen Ausgestaltungen einer Waschanlage sind aus dem Stand der Technik bekannt und brauchen keine nähere Erläuterung.

Zudem ist im Sinne der vorliegenden Erfindung unter dem Begriff "Behälter" ein Behältnis oder eine Aufnahmeeinrichtung zu verstehen, das/die eine fluidmechanische Verbindung mit der Dosierpumpe und einen Hohlraum zur Aufnahme einer Substanz aufweist. Über den genannten Behälter kann die Dosierpumpe mit der in dem Behälter befindlichen Substanz gespeist werden.

Der Behälter kann in seiner Form, Bauart und/oder Größe variabel ausgestaltet sein. Die Angabe der Form, Bauart und/oder Größe des Behälters ist für die erfindungsgemäße Ermittlung des von der Dosierpumpe tatsächlich geförderten IST-Fördervolumens nicht zwingend erforderlich. Bei dem Behälter kann es sich um einen Transportkanister unterschiedlicher Größe (z.B. 25l, 30l, 200l) handeln oder um einen - im Vergleich dazu - kleineren Maschinenkanister (z.B. 5l, 10l). Der Behälter kann eine Nachfüllöffnung aufweisen, die verschließbar, insbesondere wiederverschließbar ist. Damit kann der Behälter vorteilhafterweise nachfüllbar sein. Der Behälter ist vorzugsweise geschlossen und kann eine Sensorik zur Erfassung von Messwerten aufweisen.

Der Behälter kann mit einer Drucksensorik ausgebildet sein. Die Drucksensorik kann wenigstens einen Drucksensor umfassen. Drucksensoren sind im Stand der Technik bekannt. Als Drucksensoren kann wenigstens ein Absolutdrucksensor, ein Differenzdrucksensor und/oder ein Relativdrucksensor vorgesehen sein. Der zumindest eine Drucksensor kann sich innerhalb des Behälters am Behälterboden zur direkten Druckmessung befinden.

Die Druckmessung kann alternativ oder kumulativ auch indirekt über eine hydrostatische externe Druckmessung erfolgen. Bei dieser Art der Druckmessung kann über eine mobile Lanze Druckluft am Behälterboden eingebracht werden. Die eigentliche Druckmessung erfolgt auf Basis des sich im Gaszuführungssystem aufbauenden Drucks, der über die Lanze durch die Substanz aufgebracht wird. Diese externe Druckmessung bedarf eines offenen Behälters, um das Entweichen der aus der Lanze ausströmenden Druckluft zu ermöglichen.

Alternativ oder kumulativ kann der Behälter mit einer Füllstandssensorik ausgebildet sein. Die Füllstandssensorik umfasst zumindest einen Füllstandmesser. Der Füllstandmesser kann z.B. als ein Schwimmer ausgebildet werden, der in dem Behälter entlang der Höhenachse beweglich eingebracht ist. Der Füllstand einer Substanz im Behälter bzw. die Position des Schwimmers kann über eine Reihe von elektronischen Kontakten, z.B. auf elektromagnetischer Basis, wie z.B. Reed-Kontakten, ermittelt werden, die in vordefinierten Abständen entlang der Höhenachse angeordnet sind.

Ferner ist im Sinne der vorliegenden Erfindung unter dem Fördervolumen das mit der Dosierpumpe geförderte Volumen der Substanz in einem bestimmten Messzeitraum zu verstehen (Fördervolumenstrom). Das Fördervolumen kann das durch Hub oder einen sonstigen Zyklus verdrängte Volumen aller Verdrängungselemente der Dosierpumpe während einer Hub-Bewegung des Hubkolbens sein. Das Fördervolumen kann z.B. in $cm^3$ angegeben werden.

Unter dem IST-Fördervolumen ist das ermittelte, tatsächliche Fördervolumen (von der Dosierpumpe geförderte Volumen) pro Zeiteinheit zu verstehen.

Unter dem SOLL-Fördervolumen ist das (z.B.

manuell über ein Einstellmittel, wie ein Drehrad) an der mechanischen Dosierpumpe eingestellte Volumen pro Zeiteinheit und/oder das erwartete Fördervolumen pro Zeiteinheit zu verstehen.

Damit das IST-Fördervolumen dem SOLL-Fördervolumen entspricht und nicht von diesem abweicht, ist vorteilhafterweise ein automatischer Kalibriervorgang der Dosierpumpe vorgesehen.

Zudem ist im Sinne der vorliegenden Erfindung unter dem Begriff "Substanz" jeder Stoff zu verstehen, der in dem Behälter gelagert und unabhängig vom Aggregatzustand unter Verwendung der Dosierpumpe der Fahrzeugwaschanlage zugeführt oder durch sie zur Wäsche verwendet werden kann. Die Substanz kann bspw. eine oder mehrere der Chemikalien umfassen, die zur Reinigung des Fahrzeugs notwendig sind und/oder während des Waschvorgangs den Aggregaten und/oder Betriebsmitteln der Fahrzeugwaschanlage zugeführt werden. Bei der Substanz kann es sich auch um Wasser in unterschiedlichen Aufbereitungszuständen (enthärtet, Osmosewasser etc.) handeln oder die Substanz kann Wasser enthalten.

Im Sinne der vorliegenden Erfindung ist der Behälterdatensatz ein elektronischer Datensatz, der für den Behälter, vorzugsweise in digitaler Form gespeichert, bereitgestellt wird. Der Behälterdatensatz enthält Information über die Bauform, Größe und/oder ein Aufnahmevolumen des Behälters, beispielsweise bei einem rechteckigen Behälter die Angaben zu Länge und Breite und nur optional Angaben über die Höhe. Kumulativ kann der Behälterdatensatz Information über die Art der Substanz, die Menge der Substanz (Füllvolumenwert) und/oder das Herstellungsdatum der Substanz enthalten. Der Behälterdatensatz kann in einem Speichermedium bereitgestellt und digital ausgelesen und durch eine Recheneinheit verarbeitet werden. Ferner kann der Behälterdatensatz Information über die Substanz, die sich in dem Behälter befindet (Art der waschaktiven Substanz), umfassen. Alternativ oder kumulativ beinhaltet der Behälterdatensatz als minimale Angaben nur die Angaben zur Breite und zur Länge des Behälters. Die Füllhöhe (im Behälter mit Substanz) kann entweder durch Füllstandssensoren oder über Drucksensoren ermittelt werden.

Im Sinne der vorliegenden Erfindung werden der Füllstandwert, der Druckwert und der Dichtewert über eine Sensorik - z.B. in analoger Form - ermittelt und - wenn notwendig - in jeweils einen digitalen Wert (digitaler Füllstandwert, digitaler Druckwert, digitaler Dichtewert) zur weiteren Verarbeitung gewandelt (A/D Wandler). Die genannten digitalen Werte können in einem Speichermedium, bspw. in einer Speichereinheit der Recheneinheit oder der Sensorik zwischengespeichert werden. Alternativ können die digitalen Werte direkt zur Weiterverarbeitung bereitgestellt werden. Über eine entsprechende Schnittstelle werden die digitalen Werte eingelesen und können gemäß dem erfindungsgemäßen Verfahren verarbeitet werden.

Ferner ist im Sinne der vorliegenden Erfindung unter dem Messzeitintervall die Zeitspanne zu verstehen, in der eine bestimmte Menge an Substanz von der Dosierpumpe gefördert wird. Das Messzeitintervall ist vorzugsweise konfigurierbar. Beispielsweise kann ein Messzeitintervall zeitliche Informationen bereitstellen, wieviel Substanz pro Zeitintervall verbraucht wurde. Insbesondere ändert sich die verbrauchte Menge pro Zeit in Abhängigkeit des durch einen Nutzer gewählten Waschprogramms, da für jedes Waschprogramm unterschiedliche Mengen der Substanz notwendig sein können.

Alternativ oder kumulativ kann das in Schritt d) ermittelte IST-Fördervolumen zumindest unmittelbar vor Beginn und unmittelbar nach Beendigung eines Waschprogramms ermittelt werden, um einen durch das Waschprogramm verursachten Verbrauch der geförderten Substanz zu bestimmen. Kumulativ oder alternativ können Fahrzeug-bezogene Daten erfassten werden, um einen Verbrauch der Substanz pro fahrzeug-bezogenem Datum zu berechnen. Die fahrzeug-bezogenen Daten sind ausgewählt aus der Gruppe, bestehend aus: Fahrzeuggröße, Verschmutzungsgrad und Waschdauer.

Bei dem Einstellmittel kann es sich z.B. um ein mechanisches Einstellmittel an der Dosierpumpe, wie z.B. ein Drehrad, handeln. Das Einstellmittel kann alternativ auch auf einer Mensch-Maschine-Schnittstelle (HMI) ausgebildet sein. Das Einstellmittel dient dazu, das SOLL-Fördervolumen einzustellen oder vorzugeben.

In einer vorteilhaften Weiterbildung der Erfindung ist es möglich, ein geometrisches dreidimensionales Modell des Behälters einzulesen, das eine Fläche des Behälters über die Höhe definiert. Für jede Höhe können unterschiedlich große Flächen definiert ein, so dass ein Volumen des Behälters in Abhängigkeit von der Höhe bereitgestellt werden kann. Dies hat den Vorteil, dass beliebige Behälterformen verwendet werden können, die beispielsweise konkave oder konvexe Außenkonturen in einer Seitenansicht aufweisen. In dieser Ausführungsform der Erfindung ist es nicht erforderlich, dass der Behälterdatensatz einen Höhenwert für den Behälter umfasst. Das Aufzeichnen des Höhenwertes kann allerdings optional verwendet werden, um die Berechnungen zu verifizieren.

In einer anderen vorteilhaften Weiterbildung der Erfindung kann das Einlesen des digitalen Dichtewertes für die mit der Dosierpumpe zu fördernde Substanz über das Einlesen eines Codes und/oder Datensatzes erfolgen. Der Code ist vorzugsweise als digitaler Code ausgebildet und kann z.B. ein ein-dimensionaler Code (z.B. Barcode), ein zwei-dimensionaler Code (z.B. QR-Code) oder als mehr dimensionaler Code ausgebildet sein, z.B. in Form eines Transponderetiketts. Der Code kann z.B. auf dem Behälter platziert und über ein Einlesemittel (Codescanner) eingelesen werden. Der Datensatz kann über eine Schnittstelle eingelesen werden (z.B. in einfachster Form auf einer Benutzerschnittstelle). Der Code und/oder der Datensatz codieren den Dichtewert der zu fördernden Substanz.

Alternativ oder kumulativ kann es in einer anderen vorteilhaften Weiterbildung der Erfindung vorgesehen sein, dass das Einlesen des digitalen Dichtewertes für die mit der Dosierpumpe zu fördernde Substanz durch eine interne Berechnung erfolgt.

Als vorteilhaft hat sich die Möglichkeit erwiesen, die Dichte der zu fördernden Substanz - wenn sie nicht bereitgestellt werden kann (z.B. durch Einlesen über ein Transponderetikett) - nicht abzuschätzen, da hierbei nicht unerhebliche Folgefehler entstehen. So kann vorgesehen sein, die Dichte rechnerisch zu bestimmen. Dazu wird eine Referenzierung des gemessenen Füllstands (Füllstandssensor) mit einem weiteren Sensor ausgeführt. Im einfachsten Fall kann eine Lanze vorgesehen sein, über die Druckluft appliziert werden kann und zumindest ein Schwimmer (als weiterer Sensor), der den Füllstand als Referenz zum Zeitpunkt der Druckluftapplikation bzw. Druckmessung ausgibt.

Alternativ oder kumulativ wird der Dichtewert also nicht direkt sensorisch erfasst oder über einen Code eingelesen, sondern mittels einer Softwareroutine aus anderen Daten berechnet oder ermittelt.

Die Softwareroutine kann auf einer Recheneinheit implementiert sein, so dass es sich in diesem Fall bei der vierten Schnittstelle um eine interne Schnittstelle (zur Recheneinheit) handelt. Die Softwareroutine ist dazu ausgebildet, über den erfassten Druckwert und die erfasste Füllstandhöhe für einen Referenzpunkt und einen Referenzwert eines weiteren Sensors, z.B. eines Temperatursensors, eines Ultraschallsensors, eines einfachen Schwimmers, eines Schwinggabelsensors bzw. einer Vibrationssonde und/oder eines Sensors zu Erfassung des Gegendrucks (in Bezug auf das System, in das gefördert werden soll und quasi gegen den gefördert wird, z.B. in die Förderleitung oder in das Arbeitsaggregat), die Dichte rechnerisch zu bestimmen. Bei der Vibrationssonde kann es sich um einen Füllstandgrenzschalter handeln, der je nach Füllstand anders gedämpft wird und bei dem sich die Frequenz ändert. Zur Referenzierung kann insbesondere zumindest ein zusätzlicher Sensor (z.B. Füllstand über dem Drucksensor) als weiterer Sensor zur Datenerfassung ausgebildet sein. Es kann dann anhand des Zusammenhangs für den hydrostatischen Druck

$$p(h) = \rho * g * h + p_0$$

bei Erreichung des Schaltpunktes des Füllstandssensors, der eine bekannte Differenzhöhe h zum Messpunkt des Druckes aufweisen muss, die Dichte des Fluids errechnet werden. Der verwendete Drucksensor ist für einzelne Messstellen idealerweise ein Differenzdrucksensor, der den Überdruck gegen Atmosphäre misst, um barometrische Luftdruckschwankungen aus der Berechnung auszuschließen. Alternativ können auch absolut messende Sensoren verwendet werden, die digital mit einem ebenfalls absolut messenden Sensor abgeglichen werden, der den aktuellen Luftdruck ermittelt. Es ergibt sich also $\rho = \frac{p}{g * h}$ am Referenzpunkt. Die Dichte wird jedesmal bei Erreichung des Referenzfüllstandes abgeglichen und zur jeweilig aktuellen Temperatur oder zu dem aktuellen Wert des weiteren Sensors (z.B. Gegendrucksensor, Ultraschallsensorwert etc.) abgespeichert.

Alternativ oder kumulativ kann es vorgesehen sein, dass das erfindungsgemäße Verfahren einen Verfahrensschritt des Erfassens eines an der Dosierpumpe eingestellten SOLL-Fördervolumens oder Fördervolumenstroms (Fördervolumen pro Zeiteinheit) umfasst. Das SOLL-Fördervolumen oder der Fördervolumenstrom kann über das Einstellmittel variiert werden. Ferner kann das SOLL-Fördervolumen oder der Fördervolumenstrom aus der Einstellung des Einstellmittels über eine geeignete Sensorik (z.B. optische Sensoren zur Erfassung der Stellung des Einstellmittels) erfasst werden. Ferner kann der aktuelle Wert des Einstellmittels und somit des SOLL-Fördervolumens oder des Fördervolumenstroms von dem Einstellmittel erfasst und in digitaler Weise bereitgestellt werden. Kumulativ oder alternativ kann das SOLL-Fördervolumen oder der Fördervolumenstrom über die Mensch-Maschine-Schnittstelle erfasst werden.

Gemäß einem weiteren Aspekt bezieht sich die Erfindung auf eine automatische Kalibrierung einer mechanischen (insbesondere pneumatischen) Dosierpumpe. Dazu wird das Verfahren zur Ermittlung des IST-Fördervolumens, wie vorstehend beschrieben, verwendet, um das so ermittelte IST-Fördervolumen mit einem erfassten SOLL-Fördervolumen abzugleichen, um Kalibriersignale zu erzeugen. Das SOLL-Fördervolumen kann pro Zeiteinheit erfasst und/oder eingestellt werden (also als SOLL-Fördervolumenstrom) der entsprechend mit einem IST-Fördervolumenstrom in übereinstimmender Zeiteinheit verglichen wird.

Kumulativ oder alternativ kann es somit vorgesehen sein, dass Kalibriersignale (z.B. in digitaler Form zur Ansteuerung der Dosierpumpe) bereitgestellt werden. Die Kalibriersignale dienen einer automatischen Kalibrierung der Dosierpumpe auf Basis des berechneten Abgleichs. Wenn der Abgleich, also die Abweichung von SOLL- und IST-Fördervolumen linear ist, kann ein Offset berechnet werden aus der Differenz zwischen dem erfassten eingestellten SOLL-Fördervolumen und dem ermittelten IST-Fördervolumen. Insbesondere kann die Kalibrierung der Dosierpumpe unter Verwendung des Offsets und/oder insbesondere durch Anwendung des Offsets an dem Einstellmittel erfolgen. Die Abweichung zwischen SOLL- und IST-Fördervolumen kann in komplexeren Fällen (nicht-lineares Verhalten der Abweichung) durch einen Microcontroller oder durch eine elektronische Schaltung berechnet werden.

Alternativ oder kumulativ kann es vorgesehen sein, dass das in Schritt d) ermittelte IST-Fördervolumen mit dem eingestellten SOLL-Fördervolumen auf Übereinstimmung verglichen wird und automatisch ein Kalibrierindikator berechnet wird, um ein Kalibriererfordernissignal auszugeben, falls der berechnete Kalibrierindikator einen vorkonfigurierbaren Schwellenwert übersteigt, und/oder um eine Fehlerbehebungsmaßnahme einzuleiten. Dies dient dazu, automatisch und proaktiv zu indizieren, dass eine (möglicherweise erneute) Kalibrierung erforderlich ist. Der Schwellenwert kann in einer Konfigurationsphase konfiguriert werden. Damit kann das Verfahren und/oder Dosiersystem vorteilhafterweise sehr flexibel an die aktuellen Bedingungen angepasst werden.

Alternativ oder kumulativ kann es vorgesehen sein, dass Steuersignale zur Ansteuerung der Dosierpumpe berechnet werden. Die Berechnung der Steuersignale basiert auf dem aus dem in Verfahrensschritt d) ermitteltem IST-Fördervolumen und optional einem Umgebungsparameterdatensatz.

Der Umgebungsparameterdatensatz ist ein elektronsicher Datensatz und umfasst eine Menge von Umgebungsparametern als technische Parameter einer Umgebung der Dosierpumpe und/oder einer Umgebung eines Einspeisesystems bzw. Zielsystems, in das die Substanz gefördert werden soll (Leitungssystem und/oder Arbeitsaggregat). Ein Umgebungsparameter kann bspw. die Lufttemperatur der Umgebung, in dem der Behälter gelagert ist und/oder die Temperatur im Behälter, umfassen. Alternativ oder kumulativ kann ein Umgebungsparameter die Temperatur der Substanz in der Dosierpumpe und/oder im Behälter und/oder einen Gegendruck im System repräsentieren. Der Gegendruck stellt einen Widerstand im System dar, der sich aus der Viskosität der Substanz ergibt und somit für jede Substanz und/oder für unterschiedliche Temperaturen unterschiedlich sein kann. Alternativ oder kumulativ kann der Umgebungsparameter einen zeitvariablen Zustand des Fahrzeugs (z.B. Verschmutzungsgrad und/oder Oberflächenfeuchtigkeit auf der Fahrzeugoberfläche) und/oder einen zeitstabilen Parameter in Bezug auf das Fahrzeug (z.B. Größe) umfassen. Unter Verwendung des Umgebungsparameterdatensatzes kann somit z.B. eine Temperaturkompensation erfolgen. Diese ist dann notwendig, wenn bspw. eine Veränderung der Viskosität der Substanz zu erwarten ist oder auftritt. Alternativ oder kumulativ kann die Dosierleistung an den erfassten Verschmutzungsgrad des Fahrzeugs angepasst werden. Durch die Möglichkeit, den tatsächlichen Verbrauch der mit der Dosierpumpe geförderten Substanz pro Fahrzugwäsche (also pro Wäsche eines Fahrzeugs mit einem spezifischen Waschprogramm) zu messen, kann der Waschprogramm-spezifische Verbrauch eingepreist werden.

Die Erfassung des Waschprogramm-spezifischen Verbrauchs wird möglich, indem ein Kennwert eingelesen wird, der das jeweilige Waschprogramm für das jeweils zu waschende bzw. gewaschene Fahrzeug eindeutig kennzeichnet. Alternativ oder kumulativ kann zu dem Kennwert noch ein Parameter aus dem Umgebungsparameterdatensatz, insbesondere der Verschmutzungsgrad und/oder andere Fahrzeug-bezogenen Daten, wie z.B. die Größe des Fahrzeugs, die Konturabweichungen vom Standardmodell (z.B. Auf- oder Anbauten an der Karosserie) verwendet werden, um den Verbrauch der geförderten Substanz in ein Verhältnis zu Fahrzeug-bezogenen Daten (Größe und/oder Verschmutzungsgrad) zu setzen.

Alternativ oder kumulativ kann es vorgesehen sein, dass ein im Behälter verbleibendes Restvolumen der Substanz ermittelt wird. Das Ermitteln kann durch eine Differenzbildung von einem eingelesenen maximalen Füllvolumenwert des Behälters und dem im Verfahrensschritt d) ermittelten IST-Fördervolumen erfolgen. In vorteilhafter Weise kann hier auf die verbrauchte Substanz pro Wäsche und/oder Zeitintervall geschlossen werden. Somit kann besser und proaktiv ein bevorstehende Nachfüllerfordernis indiziert und ausgelöst werden.

Alternativ oder kumulativ kann es vorgesehen sein, dass das Ermitteln des IST-Fördervolumens gemäß Verfahrensschritt d) unter Anwendung einer ersten Funktion erfolgt und der Behälter mit einer Füllstandsensorik versehen ist. Die erste Funktion ermittelt das IST-Fördervolumen als Funktion aus der Differenz zwischen je zwei erfassten Füllständen bzw. einer erfassten Füllstandsdifferenz (zwischen zwei Zeitpunkten), einer Länge und einer Breite des Behälters wie folgt:

$$\text{Funktion 1:} \quad \textit{ist-fv} = fs \; x \; L \; x \; B.$$

Die Variable $fs$ bezeichnet eine Füllstandsdifferenz als Differenz zwischen zwei gemessenen Füllständen zu je zwei bestimmten Zeitpunkten. Die Variable $fs1$ bezeichnet den Füllstand zu einem ersten Zeitpunkt $t1$ und $fs2$ den Füllstand zu einem zweiten Zeitpunkt $t2$. Die Füllstandsdifferenz berechnet sich mit: $fs = fs1 - fs2$. Der Füllstandsmessung ist jedoch nicht auf die Messung an nur zwei Zeitpunkten beschränkt, sondern kann auch kontinuierlich erfolgen. In letzterem Fall wird ein Fördervolumenstrom (Verlaufsangabe über die Zeit) berechnet. Die Länge des Behälters wird durch die Variable $L$ bezeichnet. Die Variable $Br$ bezeichnet die Breite des Behälters. Über die Füllstandssensorik kann die Füllmenge der Substanz in dem Behälter ermittelt werden.

In dieser Ausführungsform der Erfindung wird der Behälterdatensatz und der digitale Füllstandwert als notwendige Eingangsgrößen zur Berechnung des IST-Fördervolumens verwendet. Diese Ausführungsform der Erfindung bezieht sich auf die Verfahrensschritte a) und b) des Verfahrens.

Gemäß einer weiteren alternativen Ausführungsform ist es vorgesehen, dass das Ermitteln des IST-Fördervolumens gemäß Verfahrensschritt d) unter Anwendung einer zweiten Funktion erfolgt und der Behälter zumindest mit einem analogen Drucksensor versehen ist. Die zweite Funktion ermittelt das IST-Fördervolumen aus einer Höhe (bzw. einem Höhendifferenzwert), einer Länge und einer Breite des Behälters wie folgt:

Funktion 2: $\quad ist\text{-}fv = h \times L \times Br.$

Die Variable $h$ bezeichnet eine Füllhöhendifferenz zwischen je zwei Zeitpunkten $t_1$, $t_2$. "h1" bezeichnet eine erste Füllhöhe zu einem ersten Zeitpunkt und "h2" eine zweiten Füllhöhe zu einem zweiten Zeitpunkt. Die Füllhöhendifferenz berechnet sich mit: $h = h_1 - h_2$.

Die Füllhöhe ergibt sich für einen Behälter gemäß der Erfindung aus der Formel:

$$h = \frac{p}{\rho \times g}.$$

Es ist vorgesehen, dass der Behälter mit einer Drucksensorik, die sowohl intern, als auch extern vom Behälter eingesetzt bzw. angewendet werden kann, ausgebildet ist. Die Höhe wird somit in dieser Variante nicht gemessen oder erfasst, sondern aus Druck, Dichte und Erdbeschleunigung berechnet.

Die Variable L bezeichnet dabei die Länge und die Variable Br die Breite des Behälters, die aus dem Behälterdatensatz ermittelt werden können. Ferner bezeichnet die Variable p den gemessenen Druck und die Variable $\rho$ die Dichte der Substanz und die Variable g die Erdbeschleunigung.

In dieser Ausführungsform der Erfindung wird der Behälterdatensatz und insbesondere nur die Länge und die Breite des Behälters und der im Behälter am Behälterboden vorherrschenden Druck und die Dichte der im Behälter befindlichen Substanz als notwendige Eingangsgrößen zur Berechnung des IST-Fördervolumens verwendet. In dieser Ausführungsform ist es nicht notwendig, aber dennoch (z.B. zum Zwecke der Verifikation der berechneten Werte) möglich, einen Füllstandssensor am Behälter anzubringen bzw. diesen mit einem Füllstandssensor auszubilden. Diese Ausführungsform der Erfindung bezieht sich auf die Verfahrensschritte a) und c) des Verfahrens.

Bei den Verfahrensschritten b) und c) handelt es sich somit um Alternativen, die jedoch kombinierbar sind Es ist auch möglich, dass die Verfahrensschritte b) und c) kumulativ ausgeführt werden. Dies hat zweierlei Vorteile: Zum einen kann der Dichtewert, wenn er nicht eingelesen werden kann (z.B. von einem digitalen Code, z.B. QR Code oder generell einem 1-dimensionalen (z.B. Barcode), 2- oder mehr dimensionalen Code, der am Behälter angebracht sein kann) mit dem Füllstandwert referenziert werden, um die Dichte indirekt zu ermitteln. Zum anderen kann die erste Berechnungsalternative mit der zweiten Berechnungsalternative validiert werden und umgekehrt.

Vorzugsweise wird Verfahrensschritt a) und d) stets ausgeführt.

Alternativ oder kumulativ kann es vorgesehen sein, dass die Steuersignale die Taktfrequenz eines Hubkolbens der Dosierpumpe steuern. In vorteilhafter Weise können mechanische Toleranzen der Dosierpumpe ausgeglichen werden. Weicht beispielsweise das IST-Fördervolumen vom SOLL-Fördervolumen ab, kann durch eine Anhebung der Taktfrequenz die tatsächliche Leistung der Soll-Leistung angeglichen werden. Wenn dies für mehrere Einstellwerte der Dosierpumpe ermittelt wird, kann eine pumpenspezifische Dosierkompensation bereitgestellt werden. Ferner kann eine Anpassung der Taktfrequenz eine temperaturbedingte Förderveränderung kompensieren.

Alternativ oder kumulativ kann es vorgesehen sein, dass die Steuersignale das SOLL-Fördervolumen steuern. Über bereitgestellte Steuersignale, kann ein zu erreichendes SOLL-Fördervolumen vorgegeben/eingestellt werden. Alternativ kann das SOLL-Fördervolumen in einem geschlossenen Regelkreis auf Basis eines berechneten Abgleichs zwischen SOLL-Fördervolumen und IST-Fördervolumen geregelt werden.

Alternativ oder kumulativ kann es vorgesehen sein, dass bei dem Einlesen des digitalen Druckwertes in Verfahrensschritt c) der Druck in dem Behälter mit einem internen Messverfahren gemessen wird. In vorteilhafter Weise kommt bei dem internen Messverfahren zumindest eine Drucksensor zum Einsatz, der in dem Behälter angeordnet ist. Hierfür können im Stand der Technik bekannte Drucksensoren und/oder Verfahren zur Ermittlung des Drucks eingesetzt werden.

Gemäß einer alternativen oder ergänzenden vorteilhaften Ausführungsform ist vorgesehen, dass bei dem Einlesen des digitalen Druckwertes in Verfahrensschritt c) der Druck in dem Behälter mit einem externen Messverfahren gemessen wird. Bei dem externen Messverfahren muss kein Drucksensor in dem Behälter angeordnet sein. In vorteilhafter Weise basiert die externe Messung auf einer hydrostatischen Druckmessung unter Verwendung einer Lanze zur Applikation von Druckluft. Die Druckluft wird in den Behälter, insbesondere im Bereich des Behälterbodens über die Lanze eingebracht. Die Lanze stellt einen nach unten offenen Raum (offenes Volumen) dar. Die eingebrachte Luft füllt den Raum gegen den hydrostatischen Druck der Flüssigkeit auf, bis die Luft an der unteren Grenzfläche des Raums in die Flüssigkeit austritt. Der sich einstellende Luftdruck in dem Raum entspricht dem Flüssigkeitsdruck und kann außerhalb der Flüssigkeit mit einem Drucksensor gemessen werden. Das Verfahren wird auch als Einperlverfahren bezeichnet und ist an sich bekannt und bedarf daher keiner weiteren Erläuterung

Gemäß einer weiteren alternativen oder ergänzenden vorteilhaften Ausführungsform ist vorgesehen, dass die Dosierpumpe für einen Behälter betrieben wird, der auswechselbar ist. In vorteilhafter Weise kann mittels der vorliegenden Erfindung sichergestellt werden, das unterschiedliche Behälter in Kombination mit der Dosierpumpe variabel eingesetzt werden können. Der Betreiber der Fahrzeugwaschanlage ist nicht mehr an eine vorgegebene Art Behälter mit einem festen Volumen gebunden, sondern kann seine Fahrzeugwaschanlage mit Substanzen unterschiedlicher Behälter und somit unterschiedlicher Lieferanten betreiben. Dies ermöglicht einen effizienteren und zugleich flexibleren Betrieb der Fahrzeugwaschanlage.

Gemäß einer weiteren alternativen oder ergänzenden vorteilhaften Ausführungsform ist vorgesehen, dass die Dosierpumpe für einen Behälter betrieben wird, der nachfüllbar ist. In vorteilhafter Weise kann die Versorgung der Fahrzeugwaschanlage mit Substanz nachhaltiger und ohne einen hohen Verbrauch an Behältern ausgeführt werden.

Gemäß einer weiteren alternativen oder ergänzenden vorteilhaften Ausführungsform ist vorgesehen, dass bei dem Einlesen des Behälterdatensatzes in Verfahrensschritt a) zumindest das Einlesen eines Längenwertes und Breitenwertes für den Behälter mit einer rechteckigen Grundfläche und optional eines Höhenwertes erfolgt. Alternativ oder kumulativ ist es vorgesehen, dass bei dem Einlesen des Behälterdatensatzes in Verfahrensschritt a) zumindest das Einlesen eines Radiuswertes und Höhenwertes für den Behälter mit einer runden Grundfläche erfolgt. In vorteilhafter Weise kann der Behälter unterschiedliche Bauformen aufweisen. Über die in dem Behälterdatensatz enthaltenen Informationen kann das Volumen des Behälters ermittelt werden.

Gemäß einer weiteren alternativen oder ergänzenden vorteilhaften Ausführungsform ist es somit vorgesehen, dass die Dosierpumpe für einen Behälter betrieben wird, der eine variable Größe aufweisen kann. In vorteilhafter Weise kann die Dosierpumpe mit unterschiedlichen Volumina für jeweils eine der unterschiedlichen Substanzen betrieben werden. Somit kann die Behältergröße in Abhängigkeit des erwarteten Bedarfs für eine spezifische Substanz gewählt werden.

Gemäß einer weiteren alternativen oder ergänzenden vorteilhaften Ausführungsform ist vorgesehen, dass der Behälter ein Vorratsbehälter mit einer verschließbaren Nachfüllöffnung ist. In vorteilhafter Weise kann über die verschließbare Nachfüllöffnung verbrauchte Substanz nachgefüllt werden. Über die verschließbare Nachfüllöffnung kann das Einbringen von Fremdkörpern bei verschlossener Nachfüllöffnung unterbunden werden.

Weiterhin kann es vorgesehen sein, dass der Vorratsbehälter in fluidmechanischer Verbindung zu einem Mischer und/oder zu zumindest einem Arbeitsaggregat der Fahrzeugwaschanlage steht. Unter einem Mischer ist eine Baugruppe der Fahrzeugwaschanlage zu verstehen, in der eine Substanz mit einer weiteren Substanz (z.B. Wasser) oder einer anderen Chemikalie vermischt werden kann. Der Mischer dient zur Bereitstellung von einem Gemisch von wenigstens zwei Substanzen, die eine bestimmte Charakteristik aufweisen, um ein erwartetes Reinigungsergebnis in einem spezifischen Waschprogramm und/oder Waschvorgang zu erzielen. Bei dem Mischer kann es sich in einer einfachen Ausführung um ein fluidmechanisches Verbindungselement, wie einen Schlauch, handeln. Die fluidmechanische Verbindung ermöglicht einen Fluidtransport von dem Behälter über die Dosierpumpe zu dem Mischer und/oder den Arbeitsaggregaten. Die fluidmechanische Verbindung kann beispielsweise Schlauchverbindungen und/oder Rohrverbindungen umfassen. Unter den Arbeitsaggregaten sind die Aggregate der Fahrzeugwaschanlage zu verstehen, die in direkter Weise eine Reinigungsaktion ausführen.

Kumulativ oder alternativ kann es vorgesehen sein, dass der Behälter ein zumindest vorübergehend an die Dosierpumpe fluidmechanisch angebundener Kalibrierbehälter ist, der eine signifikant kleinere Baugröße hat als ein Vorratsbehälter, aus dem die Substanz mittels der Dosierpumpe zum Zwecke der Fahrzeugwäsche gefördert werden soll. Hierbei beschreibt der Begriff "vorübergehend" einen zeitlichen Abschnitt, der nicht von langer Dauer sein muss, allerdings vorbestimmt ist. Beispielsweise kann vorübergehend den zeitlichen Abschnitt umfassen, in dem der Kalibrierbehälter mit einer vorgegebenen und bekannten Substanz zur Kalibrierung mit der Dosierpumpe in fluidmechanischer Verbindung steht. In vorteilhafter Weise kann somit die Dosierpumpe und/oder die Fahrzeugwaschanlage unter Verwendung einer bekannten und vorgegebenen Menge der Substanz kalibriert werden.

Kumulativ oder alternativ kann es vorgesehen sein, das in Verfahrensschritt d) ermittelte IST-Fördervolumen mit einem Sollwert auf Übereinstimmung zu vergleichen und bei Abweichungen automatisch einen Fehlerindikator zu berechnen ist. In vorteilhafter Weise kann ein Warnsignal auszugeben, falls der berechnete Fehlerindikator einen vorkonfigurierbaren Schwellenwert übersteigt. Das Warnsignal kann ein akustisches, visuelles oder audiovisuelles Warnsignal und/oder ein Vibrationswarnsignal umfassen. Dazu umfasst das Dosiersystem einen optischen und/oder akustischen Signalgeber und/oder einen Vibrationssignalgeber, der an einem elektronischen Endgerät (z.B. Smartdevice, wie z.B. Hany, mit einer Steuerungsapplikation auf der das Verfahren implementiert ist) ausgebildet sein kann. Alternativ oder kumulativ kann der Signalgeber auch auf einer Benutzerschnittstelle ausgebildet sein. Das Warnsignal kann somit auch über die Mensch-Maschine-Schnittstelle bereitgestellt werden. Weiterhin vorteilhaft kann eine Fehlerbehebungsmaßnahme eingeleitet werden, falls der berechnete Fehlerindikator einen vorkonfigurierbaren Schwellenwert übersteigt. Somit kann eine Diagnose der Abweichung erfolgen und basierend auf der Diagnose eine Behebung des identifizierten Fehlers erfolgen.

Vorzugsweise erfolgt das Einlesen in Schritt a) nur einmal für mehrere, insbesondere alle, Ermittlungen des IST-Fördervolumens in Schritt d) für den jeweiligen Behälter. Die Einlese-Schritte b) und c) erfolgen jedoch bevorzugt mehrfach und insbesondere kontinuierlich.

Kumulativ oder alternativ kann es vorgesehen sein, dass das Ermitteln des IST-Fördervolumens in Schritt d) an zumindest zwei Messzeitpunkten erfolgt. Insbesondere kann durch die Verwendung von zumindest zwei Messzeitpunkten eine zeitliche Entwicklung abgebildet werden und daraus notwendige Informationen über die IST-Fördervolumina zu den Messzeitpunkten abgeleitet werden. Insbesondere können ein erster Messzeitpunkt und ein letzter Messzeitpunkt ein Messzeitintervall festlegen, das mit der Dauer einer Wäsche oder eines Waschprogramms übereinstimmt. Es können die Messzeitpunkte z.B. unmittelbar vor Beginn und nach dem Beenden von zumindest einer Fahrzeug-Wäsche liegen, so dass auf die jeweils ermittelten IST-Fördervolumina, die jeweils einem Messzeitpunkt zugeordnet sind, eine Differenzbildung angewendet wird, die einen Volumenunterschied zwischen den beiden Messzeitpunkten repräsentiert. Somit kann die Differenzbildung ein IST-Fördervolumen pro komplett oder vollständig ausgeführter Fahrzeug-Wäsche repräsentieren. Alternativ kann vorgesehen sein, mehrfach punktuell oder kontinuierlich während zumindest einer FahrzeugWäsche zu messen, um somit die Anzahl an möglichen Messfehlern durch Ausreißer in der Messung zu minimieren.

Kumulativ oder alternativ kann es vorgesehen sein, dass das Messzeitintervall kürzer gewählt wird und mit einem Waschprogrammabschnitt eines vollständigen Waschprogramms korreliert. Ein Waschprogrammabschnitt ist ein Abschnitt in dem gesamten Waschprogramm, der mit anderen Waschprogrammabschnitten zusammen zu einem vollständigen Waschprogramm kombiniert werden kann. Ein Waschprogrammabschnitt wird durch Funktionsblöcke unter Verwendung von Arbeitsgeräten der Waschanlage ausgeführt. Ein Waschprogrammabschnitt kann z.B. eine Felgenwäsche, eine Unterbodenwäsche, ein Wachsvorgang, eine Politurapplikation, eine Trocknung sein. Die Waschprogrammabschnitte sind einzeln und separat wählbar (z.B. auf einer Benutzerschnittstelle). In dieser Weiterbildung ist es nun vorteilhafterweise möglich, das ermittelte IST-Fördervolumen pro Waschprogrammabschnitt zu berechnen. Damit wird eine gezieltere und spezifischere Analyse des Verbrauchs pro Waschprogrammabschnitt möglich.

Kumulativ oder alternativ kann es vorgesehen sein, dass zusätzlich zum Ermitteln des IST-Fördervolumens eine Anzahl von mit der Dosierpumpe ausgeführten Hüben erfasst und gespeichert wird. Die Anzahl an Hüben der Dosierpumpe kann als Hub-Anzahl festgelegt werden. Ferner kann vorgesehen sein, dass das ermittelte IST-Fördervolumen pro Hub ermittelt bzw. berechnet wird. In vorteilhafter Weise kann über die Auswertung der Hub-Anzahl eine eigentliche Funktionsüberprüfung der Dosierpumpe erfolgen. Wird zudem über einen längeren Zeitraum, bei einem nach der Spezifikation korrekt funktionierender Fahrzeugwaschanlage gemessen und dabei die Hubanzahl des Hubkolbens der Dosierpumpe erfasst, kann ein immer genauer werdender Wert für das eingestellte Hubvolumen ermittelt werden. Dieses Hubvolumen kann folgend zu einer exakten Berechnung eines Einzelverbrauchs einer Fahrzeug-Wäsche verwendet werden. Sobald der Wert vorliegt (geringe Änderung des gleitenden Mittelwerts), können die bis dahin durchgeführten Fahrzeug-Wäschen nachberechnet und zukünftige Fahrzeug-Wäschen direkt bewertet werden. Andererseits kann vorherberechnet werden, wie schnell sich zukünftig der Füllstand verändert und falls das nicht wie vorherberechnet passiert, eine Fehlermitteilung über Mensch-Maschine-Schnittstelle ausgegeben werden. Aus der Fehlermitteilung kann das Durchführen einer Funktionsprüfung des Systems abgeleitet werden.

Der Behälterdatensatz kann in Schritt a) einmalig eingelesen werden. Dies hat den Vorteil, unnötige Datenerfassungen zu vermeiden. Das Einlesen des Behälterdatensatzes kann für jeweils einen Behälter einmalig erfolgen. Alternativ oder kumulativ kann der in Schritt b) gemessene Füllstand und/oder der in Schritt c) gemessene Druck und der in Schritt c) eingelesene Dichtewert vorzugsweise in einem konfigurierbaren Messzeitintervall gemessen und/oder eingelesen werden. In einer vorteilhaften Weiterbildung der Erfindung werden in dem konfigurierbaren Messzeitintervall auch die Hubanzahl, wie vorstehend beschrieben, erfasst. Dies hat den Vorteil, dass ein Hubvolumen (IST-Fördervolumen pro Hub) bestimmbar ist. Mit einer Multiplikation der bekannten Anzahl von ausgeführten Hüben mit dem bestimmten Hubvolumen kann das in dem Messzeitintervall (z.B. pro ausgeführtem Waschprogramm) tatsächlich geförderte Volumen bestimmt werden.

Kumulativ oder alternativ kann es vorgesehen sein, dass aus dem in Verfahrensschritt d) bestimmten IST-Fördervolumen und einem eingelesenen Kennwert zur Identifikation des ausgeführten Waschprogramms der Fahrzeug-Wäsche ein tatsächlicher waschprogrammspezifischer Verbrauch pro Fahrzeug-Wäsche berechnet wird. Dieser Verbrauch kann mit einem erwarteten Verbrauch für die Fahrzeug-Wäsche verglichen werden, um, wenn Abweichungen vorliegen, korrigierende Maßnahmen einzuleiten.

Gemäß einer weiteren Ausführungsform ist vorgesehen, dass aus dem ermittelten IST-Fördervolumen eine Anwendungskonzentration der mit der Dosierpumpe geförderten Substanz in einen Mischer bestimmt wird, wobei der Mischer zu Mischung von Substanzen bestimmt ist. Der Mischer kann zur Mischung von Substanzen ausgebildet sein, die von einer oder von mehreren (unterschiedlichen) Dosierpumpen gefördert werden.

Kumulativ oder alternativ kann es vorgesehen sein, dass das in Verfahrensschritt d) ermittelte IST-Fördervolumen auf zugeordnete Weise mit einem Kennwert zur Identifikation eines jeweils ausgeführten Waschprogramms der Fahrzeug-Wäsche gespeichert wird. Durch den Kennwert werden in vorteilhafter Weise die bei der Fahrzeug-Wäsche verwendeten Substanzen und/oder die Dauer der Fahrzeug-Wäsche indiziert. Der Kennwert kann als ein einmalig zu verwendendes Merkmal ausgebildet sein, der einem Typ einer Fahrzeug-Wäsche bzw.

Parametern der Fahrzeug-Wäsche zugeordnet wird und diese eindeutig identifiziert. Über den Kennwert wird die Fahrzeug-Wäsche und insbesondere das Waschprogramm, die in der Fahrzeug-Wäsche eingesetzten Substanzen und/oder die zeitliche Dauer der FahrzeugWäsche codiert. Der Kennwert kann in einer Speichereinheit gespeichert werden. Der Kennwert kann im Stand der Technik bekannten Codierungen umfassen.

Vorstehend wurde die Lösung der Aufgabe anhand des computer-implementierten Verfahrens gemäß dem ersten Aspekt der Erfindung beschrieben. Dabei erwähnte Merkmale, Vorteile oder alternative Ausführungsformen sind ebenso auch auf die anderen beanspruchten Gegenstände bzw. Aspekte der Erfindung übertragbar und umgekehrt. Mit anderen Worten können auch die gegenständlichen Ansprüche (die beispielsweise auf eine Recheneinheit, ein System oder auf ein Computerprogramm gerichtet sind) mit den Merkmalen weitergebildet sein, die in Zusammenhang mit dem Verfahren beschrieben oder beansprucht sind und umgekehrt. Gleiches gilt umgekehrt, so dass Merkmale, umgesetzt durch eine Recheneinheit, ein System oder, die auf ein Computerprogramm gerichtet sind, in einem Verfahrensschritt umgesetzt sein/werden und Bestandteil des computer-implementierten Verfahrens sein können. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend im Zusammenhang mit dem Verfahren beschriebenen bevorzugten Ausführungsform der Erfindung werden nicht explizit für die Vorrichtung wiederholt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Einlesen" von Daten mit einer Einleseschnittstelle und entsprechenden Anweisungen zum Einlesen von Daten durchgeführt werden. Um Redundanz zu vermeiden, wird die Vorrichtung deshalb nicht noch einmal explizit beschrieben, obwohl es auch in den alternativen Ausführungsformen, die in Bezug auf das Verfahren beschrieben sind, verwendet werden kann.

In einem weiteren Aspekt betrifft die vorliegende Erfindung eine Recheneinheit zur Ermittlung eines IST-Fördervolumens für eine Dosierpumpe. Die Recheneinheit kann zur Ausführung des vorstehend beschriebenen Verfahrens bestimmt sein. Die Dosierpumpe ist zur Förderung einer Substanz aus einem Behälter bestimmt. Ferner ist die Dosierpumpe mit einem Einstellmittel zur manuellen Einstellung eines SOLL-Fördervolumens versehen und zur Verwendung in einer Fahrzeugwaschanlage bestimmt. Die Recheneinheit weist eine erste Einleseschnittstelle auf. Die erste Einleseschnittstelle ist zum Einlesen eines Behälterdatensatzes für den Behälter, aus dem die Substanz mittels der Dosierpumpe gefördert werden soll, ausgebildet. Ferner umfasst die Recheneinheit eine zweite Einleseschnittstelle. Die zweite Einleseschnittstelle ist zum Einlesen eines digitalen Füllstandwertes ausgebildet. Der digitale Füllstandwert repräsentiert einen in dem Behälter mittels zumindest von einem analogen Füllstandsensor gemessene Füllstandsdifferenz. Alternativ oder kumulativ zur zweiten Einleseschnittstelle weist die Recheneinheit eine dritte Einleseschnittstelle auf. Die dritte Einleseschnittstelle ist zum Einlesen eines digitalen zumindest einem analogen Drucksensor gemessene Druckdifferenz. Ferner ist (z.B. optional) eine separate vierte Einleseschnittstelle zum Einlesen eines Dichtewertes für die mit der Dosierpumpe zu fördernde Substanz ausgebildet. Ferner ist die Recheneinheit zum Ermitteln eines IST-Fördervolumens ausgebildet. Hierbei wird das von der Dosierpumpe in einem Messzeitintervall tatsächlich geförderte Fördervolumen ermittelt. Das Ermitteln des IST-Fördervolumens kann durch Anwenden einer ersten Funktion (f1) auf den eingelesenen digitalen Füllstandwert und den eingelesenen Behälterdatensatz erfolgen. Kumulativ oder alternativ kann das Ermitteln des IST-Fördervolumens durch Anwenden einer zweiten Funktion (f2) auf den eingelesenen Druckwert und den eingelesenen Dichtewert und dem eingelesenen Behälterdatensatz erfolgen. Zudem umfasst die Recheneinheit weiterhin eine Ausgabeschnittstelle. Die Ausgabeschnittstelle ist zur Ausgabe des ermittelten IST-Fördervolumens bestimmt. Die Ausgabeschnittstelle kann mit einer Kalibriereinheit in Datenverbindung stehen, um auf Basis des ermittelten IST-Fördervolumens die Dosierpumpe zu kalibrieren und Kalibriersignale zu erzeugen.

Die Einleseschnittstellen sind ausgebildet, eine Verbindung zu einem entsprechenden Medium und/oder einer entsprechenden technischen Einheit bereitzustellen, um die digitalen Daten einzulesen und der Recheneinheit zur weiteren Verarbeitung bereitzustellen. Die Einleseschnittstellen können einen Wandler zum Wandeln eines analogen Signals in ein digitales Signal und umgekehrt umfassen.

In einem weiteren Aspekt betrifft die vorliegende Erfindung ein Dosiersystem für eine Fahrzeugwaschanlage mit einer Dosierpumpe und einer Recheneinheit gemäß dem weiteren Aspekt der Erfindung. Ferner weist das Dosiersystem einen Behälter vorzugsweise zur Aufnahme der Substanz auf.

Gemäß einer Ausführungsform des Dosiersystems ist vorgesehen, dass das Dosiersystem und insbesondere die Recheneinheit mit einer Mensch-Maschine-Schnittstelle ausgebildet bzw. versehen ist. In vorteilhafter Weise ermöglicht die Mensch-Maschine-Schnittstelle eine Interaktion zwischen dem Bediener und der Recheneinheit bzw. der Fahrzeugwaschanlage. Ferner ermöglicht die Mensch-Maschine-Schnittstelle unter Umständen über das eigentliche Bedienen der Recheneinheit bzw. der Fahrzeugwaschanlage hinaus, das Beobachten der Zustände eines Waschvorganges und ein Eingreifen in den Prozess des Waschvorganges. Ein Bereitstellen der Zustände der Fahrzeugwaschanlage kann visuell und/oder akustisch oder audio-visuell erfolgen.

Beispielsweise kann die Mensch-Maschine-Schnittstelle als ein Terminal (Bedienpult) mit Signallampen, Anzeigefeldern, Taster und/oder Schaltern ausgebildet sein. Alternativ kann ein Terminal vorgesehen sein, bei dem per Software über ein Visualisierungssystem die zuvor genannten Elemente abgebildet und angewählt werden können. Dies kann bspw. über einen Bildschirm mit Eingabegeräten (Maus, Tastatur) oder über einen Touchscreen umgesetzt werden.

Das Dosiersystem kann einen Signalgeber umfassen. Der Signalgeber kann einen optischen und/oder akustischen Signalgeber und/oder einen Vibrationssignalgeber umfassen. Der Signalgeber kann zur Indizierung einer bevorstehenden Kalibrierung verwendet werden, um proaktiv auf Abweichungen zwischen SOLL- und IST-Fördervolumen hinzuweisen, falls ein konfigurierbarer Schwellenwert über- oder unterschritten wird.

In einem weiteren Aspekt betrifft die Erfindung eine Fahrzeugwaschanlage mit einem Dosiersystem, wie vorstehend beschrieben.

In einem weiteren Aspekt betrifft die vorliegende Erfindung ein Computerprogramm. Das Computerprogramm ist in eine Speichereinheit einer Recheneinheit ladbar. Das Computerprogramm enthält Programmcodeabschnitte, um die Recheneinheit zu veranlassen, das Verfahren zur Ermittlung eines IST-Fördervolumens gemäß einem der Verfahrensansprüche auszuführen, wenn das Computerprogramm in der Recheneinheit gemäß einem Aspekt der Erfindung ausgeführt wird.

## Kurze Beschreibung der Figuren

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:

Fig. 1  eine schematische Darstellung einer Recheneinheit gemäß einer Ausführungsform der Erfindung;

Fig. 2  ein Ablaufdiagramm eines Verfahrens gemäß einer Ausführungsform der Erfindung;

Fig. 3  eine schematische Darstellung eines Dosiersystems gemäß einer Ausführungsform der Erfindung;

Fig. 4  eine schematische Darstellung einer Waschanlage gemäß einer Ausführungsform;

Fig. 5  eine schematische Darstellung einer Recheneinheit gemäß einer weiteren Ausführungsform der Erfindung; und

Fig. 6  eine schematische Darstellung eines Behälters gemäß der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

## Detaillierte Beschreibung der Erfindung

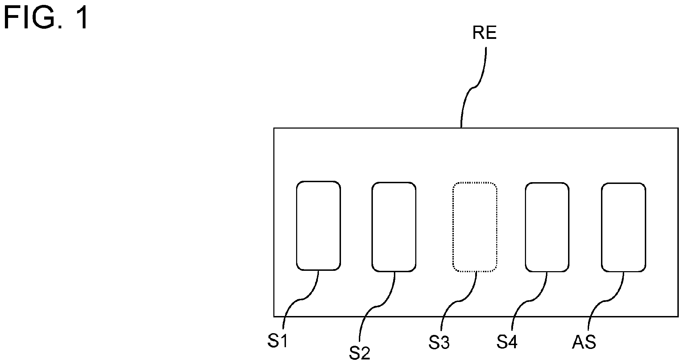

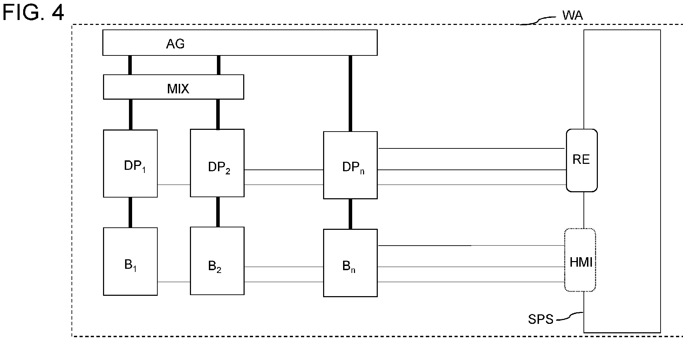

Fig. 1 zeigt eine schematische Darstellung einer Recheneinheit gemäß einer Ausführungsform der Erfindung. In Figur 1 bezeichnet Bezugszeichen RE eine Ausführungsform der erfindungsgemäßen Recheneinheit. Die mit der Fig. 1 dargestellte Ausführungsform der Recheneinheit RE ist zur Ermittlung eines IST-Fördervolumens ist-fv für eine Dosierpumpe DP bestimmt. Mittels der Dosierpumpe DP kann eine Substanz aus einem Behälter B gefördert werden. Die Substanz umfasst Mittel zur Reinigung eines Fahrzeugs, insbesondere chemische Reinigungssubstanzen zur Verwendung in einer Waschanlage WA (vgl. Fig. 4). Die Dosierpumpe DP weist weiterhin ein Einstellmittel auf. Das Einstellmittel dient der manuellen Einstellung eines SOLL-Fördervolumens. Die Dosierpumpe DP (vgl. Fig. 4) kann zur Verwendung in einer Fahrzeugwaschanlage WA bestimmt sein.

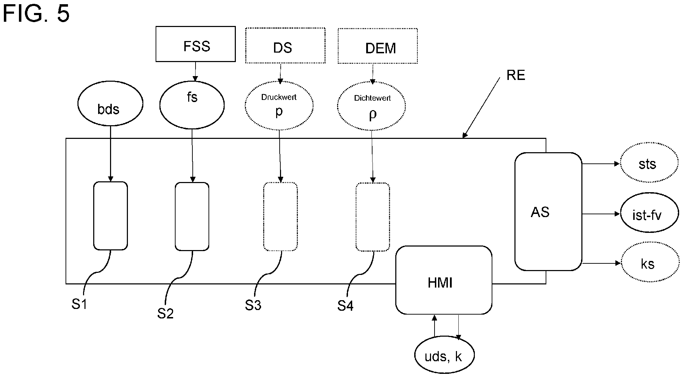

Die Recheneinheit RE weist eine erste Einleseschnittstelle S1 auf. Die erste Einleseschnittstelle S1 ist zum Einlesen eines Behälterdatensatzes bds für den Behälter B (vgl. Fig. 4 und 5) ausgebildet. Aus dem Behälter B kann mittels der Dosierpumpe DP die in dem Behälter B befindliche Substanz gefördert werden. Ferner weist die Recheneinheit RE eine zweite Einleseschnittstelle S2 zum Einlesen eines digitalen Füllstandwertes fs auf. Der Füllstandwert fs repräsentiert einen in dem Behälter B mittels zumindest einem analogen Füllstandsensor FSS gemessenen Füllstand bzw. eine Füllstandsdifferenz zwischen unterschiedlichen Zeitpunkten. Alternativ oder kumulativ zur zweiten Einleseschnittstelle S2 weist die Recheneinheit RE eine dritte Einleseschnittstelle S3 auf. Mittels der dritten Einleseschnittstelle S3 kann ein digitaler Druckwert p (vgl. Fig. 5) eingelesen werden. Der digitale Druckwert p repräsentiert einen in dem Behälter B mittels zumindest einem analogen Drucksensor DS gemessenen Druck bzw. eine Druckdifferenz zwischen unterschiedlichen Zeitpunkten. Es kann vorgesehen sein, einen Dichtewert ρ für die mit der Dosierpumpe DP zu fördernde Substanz einzulesen. Dies kann über eine vierte Einleseschnittstelle S4 erfolgen. Alternativ oder kumulativ kann das Einlesen des Dichtewertes auch über die dritte Einleseschnittstelle S3 erfolgen. Dann muss die dritte Einleseschnittstelle S3 allerdings einen Busanschluss haben. Über den Busanschluss bzw. die Busschnittstelle kann ein RFID-Leser oder ein QR-Scanner und ein Drucksensor angeschlossen werden. Da dies eine optionale Ausbildung ist, ist sie in Fig. 1 und 5 gepunktet dargestellt.

Die Recheneinheit RE ist zum Ermitteln eines IST-Fördervolumens ist-fv bestimmt (vgl. Fig. 5). Das IST-Fördervolumen ist-fv gibt das von der Dosierpumpe DP in einem Messzeitintervall tatsächlich geförderte Fördervolumen an. Das IST-Fördervolumen wird in einer ersten Ausführungsform der Erfindung auf der Basis des digitalen Füllstandwertes fs und auf Basis des eingelesenen Behälterdatensatzes bds ermittelt (Schritte a) und b) des Verfahrens).

In einer zweiten Ausführungsform der Erfindung wird das IST-Fördervolumen auf Basis des digitalen Druckwertes p und des eingelesenen Dichtewertes ρ und auf Basis des eingelesenen Behälterdatensatzes bds, insbesondere der Länge L und der Breite Br ermittelt (Schritte a) und c) des Verfahrens). In der zweiten Ausführungsform der Erfindung ist es nicht zwingend notwendig (aber zur Validierung durchaus möglich), Füllstandssensoren am Behälter anzubringen und einen Füllstand zu messen.

Die Recheneinheit kann als eine eigenständige Computereinheit implementiert sein. Alternativ kann die Recheneinheit in Software implementiert sein und auf einem Digitalprozessor und/oder Mikroprozessor ausgeführt werden. Weiterhin kann die Recheneinheit in einer speicherprogrammierbaren Steuerung implementiert sein oder alternativ als eine speicherprogrammierbare Steuerung ausgebildet sein.

Ferner weist die Recheneinheit RE eine Ausgabeschnittstelle AS auf. Die Ausgabeschnittstelle AS ist zur Ausgabe des ermittelten IST-Fördervolumens ist-fv bestimmt. Die Ausgabeschnittstelle kann ausgebildet sein, das ermittelte IST-Fördervolumen zur Anzeige auf einer Ausgabeeinheit bereitzustellen. In einer weiteren Ausführungsform kann die Ausgabeschnittstelle selbst als eine Ausgabeeinheit, bspw. als ein Monitor oder Touchscreen ausgebildet sein.

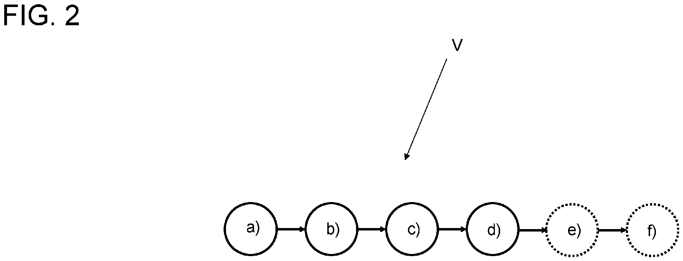

Fig. 2 zeigt ein Ablaufdiagramm eines computer-implementierten Verfahrens gemäß einer Ausführungsform der Erfindung. In Fig. 2 bezeichnet das Bezugszeichen V eine Ausführungsform des erfindungsgemäßen computerimplementieren Verfahrens. Das computer-implementierte Verfahren V zur Ermittlung eines IST-Fördervolumens für eine Dosierpumpe DP umfasst bei der dargestellten Ausführungsform mehrere Schritte. Die Dosierpumpe DP ist zur Förderung einer Substanz aus einem Behälter B bestimmt. Weiterhin ist die Dosierpumpe DP mit einem Einstellmittel zur manuellen Einstellung eines SOLL-Fördervolumens zur Verwendung in einer Fahrzeugwaschanlage WA bestimmt ist.

In einem ersten Schritt a) erfolgt ein Einlesen eines Behälterdatensatzes bds für den Behälter B. Der Behälter B umfasst die Substanz. Diese Substanz soll mittels der Dosierpumpe DP aus dem Behälter B gefördert werden. In einem weiteren Schritt b) kann in einer ersten Ausführungsform der Erfindung ein Einlesen eines digitalen Füllstandwertes fs erfolgen. Der digitale Füllstandwert fs repräsentiert eine Differenz zwischen je zwei Füllständen, die in dem Behälter B mittels zumindest einem analogen Füllstandsensor FSS gemessenen wurden, insbesondere einen Füllstand der Substanz in dem Behälter B. Alternativ oder kumulativ zu Schritt b) kann bei einer zweiten Ausführungsform der Erfindung in Schritt c) ein Einlesen eines digitalen Druckwertes p erfolgen. Der digitale Druckwert p repräsentiert eine Differenz zwischen zwei zu unterschiedlichen Zeitpunkten gemessen Drücken in dem Behälter B mittels zumindest einem analogen Drucksensor DS. Weiterhin erfolgt in Schritt c) ein Einlesen eines digitalen Dichtewertes ρ für die mit der Dosierpumpe DP zu fördernde Substanz. In einem weiteren Schritt d) erfolgt ein Ermitteln und Ausgeben des IST-Fördervolumens ist-fv, welches von der Dosierpumpe DP in einem Messzeitintervall tatsächlich gefördert worden ist. Das Ermitteln kann auf Basis des eingelesenen digitalen Füllstandwertes fs und auf Basis des eingelesenen Behälterdatensatzes bds erfolgen. Alternativ oder kumulativ kann das Ermitteln auf Basis des eingelesenen digitalen Druckwertes p und des eingelesenen Dichtewertes ρ und auf Basis des eingelesenen Behälterdatensatzes bds erfolgen. Die Schritte des erfindungsgemäßen Verfahrens, insbesondere die Schritte a) bis c) zum Einlesen können in unterschiedlicher Reihenfolge ausgeführt werden.

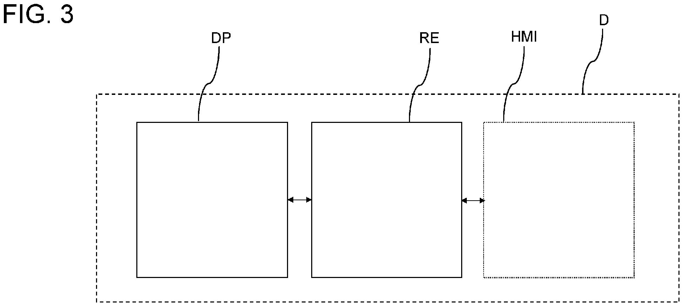

Das erfindungsgemäße Verfahren kann auf der Recheneinheit RE eines Dosiersystems D (vgl. Fig. 3) ausgeführt werden. Alternativ kann das erfindungsgemäße Verfahren auf einem dezentralen Computersystem ausgeführt werden, welche in Kommunikation mit dem Dosiersystem D bzw. der Waschanlage WA ist.

In einer weiteren Ausführungsform umfasst das Verfahren optional - und deshalb in Fig. 2 gepunktet dargestellt - weiterhin das Erfassen eines an der Dosierpumpe DP eingestellten SOLL-Fördervolumens in Schritt e). Ferner kann das Verfahren in einer weiteren Ausführungsform optional - und deshalb in Fig. 2 gepunktet dargestellt - das Bereitstellen von Kalibriersignalen ks in Schritt f) umfassen. Mittels der Kalibriersignale ks kann eine automatische Kalibrierung der Dosierpumpe DP auf der Basis eines berechneten Offsets oder anderer nichtlineare Abweichungen erfolgen. Der Offset oder die Abweichungen werden durch die Recheneinheit RE aus der Differenz zwischen dem erfassten eingestellten SOLL-Fördervolumen und dem in Verfahrensschritt d) des erfindungsgemäßen Verfahrens ermittelten IST-Fördervolumen ist-fv berechnet.

Weiterhin kann es optional vorgesehen sein, dass das im Verfahrensschritt d) ermittelte IST-Fördervolumen ist-fv mit einem Sollwert auf Übereinstimmung verglichen wird und bei Abweichungen automatisch ein Fehlerindikator berechnet wird, um ein Warnsignal auszugeben, falls der berechnete Fehlerindikator einen vorkonfigurierbaren Schwellenwert übersteigt und/oder eine Fehlerbehebungsmaßnahme einzuleiten. Das Warnsignal kann über die Ausgabeeinheit AS der Recheneinheit RE bereitgestellt und/oder ausgegeben werden. Diesbezüglich können auf eine Abweichung von einem vorbestimmten Fördervolumen korrigierende Maßnahmen durch einen Bediener vorgenommen werden. Somit wird eine gleichbleibende Qualität des Waschvorgangs sichergestellt.

Weiterhin kann vorgesehen sein, dass das Messen in den Verfahrensschritten b) oder c) kontinuierlich in einem Messzeitraum oder zu zumindest zwei Messzeitpunkten ausgeführt wird. Diese Messzeitpunkte können bevorzugt unmittelbar vor dem Beginn und nach dem Beenden wenigstens eines Waschprogramms einer Fahrzeug-Wäsche angesetzt sein. Somit kann auf die, zu dem Messzeitpunkt ermittelte IST-Fördermenge, eine Differenzbildung angewendet werden. Eine sich ergebende Differenz repräsentiert einen Fördervolumenunterschied zwischen den gewählten Messzeitpunkten. Abweichungen können erfasst, ausgewertet und entsprechend behoben werden. Damit wird es z.B. möglich, einen Waschprogramm-spezifischen Verbrauch zu indizieren.

**Fig. 3** zeigt eine schematische Darstellung eines Dosiersystems gemäß einer Ausführungsform der Erfindung. In Fig. 3 bezeichnet Bezugszeichen D eine Ausführungsform des erfindungsgemäßen Dosiersystems. Das Dosiersystem D ist ausgebildet Substanzen für eine Waschanlage WA bereitzustellen. Das Dosiersystem D umfasst eine Dosierpumpe DP zum Bereitstellen der Substanzen für die Aggregate der Waschanlage WA. Ferner umfasst das Dosiersystem D die Recheneinheit RE. Die Recheneinheit RE kann gemäß einer Ausführungsform lokal zu der Waschanlage WA und/oder dem Dosiersystem D angeordnet sein. In einer weiteren Ausführungsform kann die Recheneinheit RE dezentral zu der Waschanlage WA und/oder dem Dosiersystem D angeordnet sein und über ein Kommunikationssystem mit der Waschanlage WA und/oder dem Dosiersystem D kommunizieren.

Ferner kann das Dosiersystem D eine Mensch-Maschine-Schnittstelle HMI umfassen. Dies ist optional und deshalb in Fig. 3 gepunktet dargestellt. Die Mensch-Maschine-Schnittstelle HMI ist zur Kommunikation zwischen dem Bediener und der Recheneinheit RE, insbesondere der Waschanlage WA ausgebildet. Die Recheneinheit RE umfasst zur Kommunikation Eingabeund/oder Ausgabemittel, wie bspw. einen Monitor, Touchscreen, Tastatur und/oder Cursorbewegungsmittel.

**Fig. 4** zeigt eine schematische Darstellung einer Waschanlage gemäß einer Ausführungsform. In Fig. 4 bezeichnet das Bezugszeichen WA eine Ausführungsform der Waschanlage. Die Waschanlage WA umfasst wenigstens einen Behälter B zur Aufnahme der Substanz. Dem Behälter B ist ein Behälterdatensatz bds zugewiesen. Aus dem Behälterdatensatz bds kann zumindest ein Längenwert L und ein Breitenwert Br für den Behälter B entnommen werden. Über den Behälterdatensatz kann die Form und/oder Art des Behälters B entnommen werden. Ergänzend können dem Behälterdatensatz bds Informationen über die in dem Behälter B enthaltende Substanz entnommen werden. In einer weiteren Ausführungsform umfasst der Behälterdatensatzes bds einen Radiuswert und Höhenwert für eine Behälterform mit einer runden Grundfläche. Die Waschanlage WA kann eine Vielzahl von unterschiedlich großen und unterschiedlich geformten Behältern B umfassen, welche eine spezielle Substanz beinhalten können.

Ferner umfasst die Waschanlage WA wenigstens eine Dosierpumpe DP. Die erfindungsgemäße DP steht in fluidmechanischer Verbindung mit einem Behälter B. Die Dosierpumpe DP ist ausgebildet, die Substanz aus dem Behälter B zu den Arbeitsgeräten AG der Waschanlage WA zu fördern. In der dargestellten Ausführungsform der Waschanlage WA gemäß der Fig. 4, weist die Waschanlage WA eine Vielzahl an Dosierpumpen DP auf. Insbesondere ist eine Dosierpumpe DP einem Behälter B zum Transportieren der Substanz zugeordnet. Die Anzahl der in der Fig. 4 dargestellten Dosierpumpen DP und Behälter B ist nicht auf die dargestellte Anzahl begrenzt. Ferner kann, in Abhängigkeit der Ausgestaltung der Waschanlage WA, eine andere Anzahl an Behälter B und/oder Dosierpumpen DP vorgesehen sein. Jede der Dosierpumpen steht in Datenverbindung mit der Recheneinheit RE. Die Recheneinheit RE kann auch mehrere Instanzen aufweisend ausgebildet sein und lokal auf oder an einer Dosierpumpe DP ausgebildet sein.

In einer Ausführungsform der Waschanlage WA weisen die Dosierpumpen DP eine fluidmechanische Verbindung zu einem Mischer MIX auf. Alternativ und/oder ergänzend weisen die Dosierpumpen eine direkte fluidmechanische Verbindung zu den Aggregaten AG der Waschanlage WA auf. Der Mischer MIX ist ausgebildet, eine Mischung von verschiedenen Substanzen aus verschiedenen Behälter B zu erzeugen. Die Mischung wird gemäß dem gewählten Waschvorgang durch den Mischer MIX erzeugt und an die Aggregate AG bereitgestellt.

In einer ersten Ausführungsform kann der Mischer MIX in dem eigentlichen Fördersystem ausgebildet sein, über das die Substanz zu den Aggregaten AG der Waschanlage WA gefördert wird. Diesbezüglich kann die fluidmechanische Verbindung zwischen der Dosierpumpe DP und den Aggregaten AG der Waschanlage WA Dosierventile (nicht dargestellt) umfassen, über die für die gewünschte Mischung, die Konzentration der Substanz eingestellt wird. Das heißt, in das Fördersystem wird über die Dosierventile nur entsprechende Konzentration einer Substanz bereitgestellt, um die gewünschte Mischung an Substanz für eine spezifische Anwendung/Waschvorgang zu erhalten. Die Vermischung erfolgt automatisch bei dem eigentlichen Transport in dem Fördersystem von der Dosierpumpe DP zu den Aggregaten AG der Waschanlage WA.

In einer weiteren bevorzugten Ausführungsform kann der Mischer MIX als ein weiterer Behälter B ausgebildet sein, in dem die Substanz aus den einzelnen Behältern B über die entsprechende Dosierpumpe DP gefördert und bereitgestellt werden. In diesem Behälter B erfolgt eine Vermischung und anschließende Bereitstellung der Mischung an die Aggregate AG der Waschanlage WA.

Gemäß der dargestellten Ausführungsform der Fig. 4 umfasst die Waschanlage WA eine speicherprogrammierbare Steuerung SPS. Die speicherprogrammierbare Steuerung SPS kann die Recheneinheit RE umfassen oder mit ihr in Datenverbindung stehen. Fakultativ kann die Benutzer-Maschine-Schnittstelle HMI ausgebildet sein. Die speicherprogrammierbare Steuerung SPS steht in Kommunikation mit den Dosierpumpen DP und den Behältern B der Waschanlage WA.

Die Arbeitsgeräte AG der Waschanlage WA können z.B. Reinigungsbürsten und/oder Düsen zum Bereitstellen von Substanzen, Luft und/oder Wasser umfassen. Üblicherweise ist ein Behälter zur Förderung einer Substanz an die Arbeitsgeräte vorgesehen.

Fig. 5 zeigt eine schematische Darstellung einer Recheneinheit gemäß einer weiteren Ausführungsform der Erfindung. Die Recheneinheit RE weist die erste Einleseschnittstelle S1, die zweite Einleseschnittstelle S2 und optional oder kumulativ zur zweiten Einleseschnittstelle S2 die dritte Einleseschnittstelle S3 auf (gepunktete Darstellung, da optional). Über die Schnittstellen können Eingangsdaten bzw. Werte zur Ermittlung des IST-Fördervolumens ist-fv eingelesen werden. Über die erste Schnittstelle S1 wird der Behälterdatensatzes bds für den Behälter B eingelesen. Die erste Schnittstelle S1 kann in einer Ausführungsform als ein Einlesemittel ausgebildet sein. Alternativ kann die erste Schnittstelle S1 als elektronische Schnittstelle (Datenschnittstelle) zu einem Einlesemittel (z.B. Code Scanner, wie QR-Code Scanner) oder einem Speicher ausgebildet sein, in dem der Behälterdatensatz bds gespeichert ist. Die erste Schnittstelle S1 kann auch als eine Benutzerschnittstelle ausgebildet sein, auf der der Behälterdatensatz bds erfasst wird.

Über die zweite Schnittstelle S2 wird ein digitaler Füllstandwert fs, der einem gemessenen Füllstand in dem Behälter B entspricht. Der Füllstand wird mittels zumindest einem analogen Füllstandsensor FSS ermittelt und in dem Füllstandsensor selbst oder einer entsprechenden Wandlereinheit in einen digitalen Wert gewandelt und über die zweite Schnittstelle S2 eingelesen. Die zweite Schnittstelle S2 steht in elektrischer Verbindung und in Datenverbindung mit der Füllstandsensor FSS und/oder entsprechender Wandlereinheit bspw. ein Analog-Digital-Wandler.

Ferner kann alternativ oder kumulativ zur zweiten Einleseschnittstelle S2 eine dritte Einleseschnittstelle S3 zum Einlesen eines digitalen Druckwertes p vorgesehen sein (in Fig. 5 wieder gepunktet dargestellt). Der Druck in einem Behälter B kann mittels zumindest einem analogen Drucksensor DS ermittelt werden. Ferner kann - vorzugsweis auf einer vierten separaten Einleseschnittstelle S4 - ein Dichtewert $\rho$ für die mit der Dosierpumpe DP zu fördernder Substanz eingelesen werden. Der Dichtewert kann aus einem Dichteerfassungsmittel DEM bereitgestellt werden. Das Dichteerfassungsmittel DEM kann als ein Messgerät ausgebildet sein. Kumulativ oder alternativ kann das Dichteerfassungsmittel DEM auch als Softwarefunktionsbaustein ausgebildet sein, der die Dichte aus anderen erfassten und/oder bereitgestellten Daten berechnet. Das Einlesen des Dichtewertes kann auch durch Zugriff auf die Recheneinheit erfolgen, in der eine Softwareroutine gespeichert ist, die dazu ausgebildet ist, über den erfassten Druckwert und die erfasste Füllstandhöhe und einen Referenzwert, die Dichte rechnerisch zu bestimmen. Dazu kann insbesondere zumindest ein weiterer Sensor zur Datenerfassung ausgebildet sein. Alternativ oder kumulativ kann zur Berechnung die Erdbeschleunigung verwendet werden.

Über die Ausgabeeinheit AS kann das ermittelte IST-Fördervolumen ist-fv bereitgestellt werden. Die Ausgabeeinheit AS kann als ein Anzeigemittel, bspw. ein Monitor oder Touchscreen ausgebildet sein, über dass das ermittelte IST-Fördervolumen bildlich für einen Bediener der Waschanlage WA ausgegeben wird. Ergänzend oder alternativ (deshalb gepunktet dargestellt) können in einer Ausführungsform über die Ausgabeeinheit AS die Steuersignale sts zur Ansteuerung der Dosierpumpe DP ausgeben werden. Die Steuersignale werden aus dem im Verfahrensschritt d) des erfindungsgemäßen Verfahrens ermittelten IST-Fördervolumen ist-fv berechnet. Ergänzend oder alternativ werden die Steuersignale sts aus dem im Verfahrensschritt d) des erfindungsgemäßen Verfahrens ermittelten IST-Fördervolumen ist-fv und einem Umgebungsparameterdatensatz uds zur Ansteuerung der Dosierpumpe DP berechnet. Alternativ oder kumulativ (gepunktet dargestellt) können Kalibrierungssignale ks zur Kalibrierung der Dosierpumpe DP bereitgestellt werden.

Die Steuersignale sts können überwacht und bei Bedarf können entsprechende Maßnahmen zur Korrektur der Ansteuerung der Dosierpumpen DP vorgenommen werden. Ferner kann vorgesehen sein, dass bei Abweichung von einem SOLL-Volumenstrom eine visuelle oder audio-visuelle Meldung über die Ausgabeeinheit AS ausgegeben wird.

Ferner kann vorgesehen sein, dass über die Recheneinheit RE ein in dem Behälter B verbleibendes Restvolumen der Substanz durch Differenzbildung von einem eingelesenen maximalen Füllvolumenwert des Behälters B und dem in Verfahrensschritt d) ermittelten IST-Fördervolumen ist-fv ermittelt wird. Weiterhin kann vorgesehen sein, dass die Steuersignale sts die Taktfrequenz eines Hubkolbens der Dosierpumpe DP steuern und/oder bei dem die Steuersignale sts das Soll-Fördervolumen steuern.

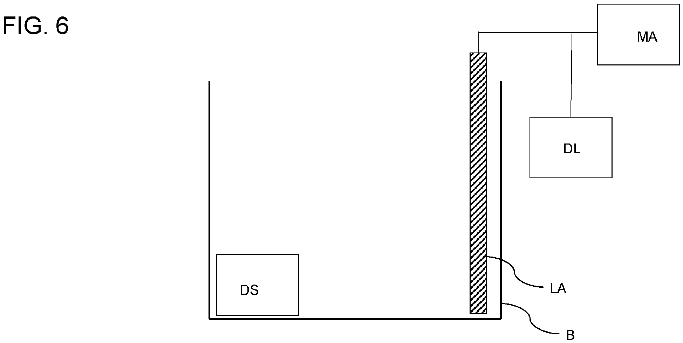

Fig. 6 zeigt eine schematische Darstellung eines Behälters, gemäß der Erfindung. Der Behälter B kann verschiedene Bauarten aufweisen. Beispielsweise kann der Behälter B eine annährend runde oder eine quadratische Grundfläche aufweisen. Ferner kann der Behälter als ein auswechselbarer und/oder nachfüllbarer Behälter ausgebildet sein.

Es kann vorgesehen sein, dass der Behälter eine variable Größe aufweist. In vorteilhafter Weise ist der Waschanlagenbetreiber somit nicht auf einen Lieferanten für Substanzen angewiesen. Vielmehr können Substanzen von verschiedenen Lieferanten bezogen werden, die diese in unterschiedlichen Formen und Bauarten von Behältern B liefern können. Dies wird möglich, da das erfindungsgemäße Verfahren unabhängig von der Behälterform und/oder unabhängig von der Sensorik (Füllstandssensorik oder Drucksensorik) am Behälter den Ist-Volumenstrom der Dosierpumpe ermittelt bzw. die spezifische Ausgestaltung des Behälters B berücksichtigt.

In einer weiteren Ausführungsform kann der Behälter B als ein Vorratsbehälter mit einer verschließbaren Nachfüllöffnung ausgebildet sein. Über die verschließbare Nachfüllöffnung kann in dem Behälter gelagertes Substrat bei Bedarf ergänzt werden. Ferner steht der Behälter B in fluidmechanischer Verbindung zu einem Mischer Mix und/oder zu zumindest einem Arbeitsaggregat AG der Fahrzeugwaschanlage WA. Über die fluidmechanische Verbindung (Fördersystem) wird die Substanz mittels der Dosierpumpe DP bereitgestellt.

Weiterhin ist vorgesehen, dass der Druck in dem Behälter B mit einem internen Messverfahren gemessen wird. Hierfür kann zumindest ein Drucksensor DS in dem Behälter B angeordnet sein. Drucksensoren sind im Stand der Technik bekannt. Der Drucksensor DS kann ein analoges Signal bereitstellen, welches dem Druck in dem Behälter B entspricht. Das analoge Signal kann über eine Wandlereinheit, bspw. ein AD-Wandler, in ein digitales Signal gewandelt und der Recheneinheit RE bereitgestellt werden. Alternativ kann der Drucksensor DS selbst die Wandlereinheit umfassen und ein digitales Signal zur weiteren Verarbeitung bereitstellen. In einer weiteren Ausführungsform kann der Druck in dem Behälter B in einem externen Messverfahren ermittelt werden. Das externe Messverfahren erfolgt unter Verwendung einer hydrostatischen Druckmessung. Bei der hydrostatischen Druckmessung wird unter Verwendung einer Lanze LA Druckluft DL in den Behälter B appliziert. Insbesondere wird die Druckluft DL im Bereich des Behälterbodens des Behälters B appliziert. Über eine Messanzeige mit Messumformer MA kann eine Auswertung des Drucks mit der die Luft durch die Substanz in dem Behälter B austritt erfolgen und gibt Aufschluss über den vorliegenden Druck in dem Behälter B.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben.

Für einen Fachmann ist es insbesondere offensichtlich, dass die Erfindung nicht nur für Behälter mit einer bestimmten Sensorik (z.B. Füllstandsmesser) angewendet werden kann, sondern auch für Behälter, die eine andere Sensorik (z.B. Druckmessung) ausweisen. Des Weiteren können die Bauteile der Recheneinheit auf mehreren physikalischen Produkten verteilt realisiert sein. So kann beispielsweise die Recheneinheit RE einen Prozessor umfassen, wobei der Prozessor zum Ermitteln des IST-Fördervolumens ist-fv bestimmt ist.

BEZUGSZEICHEN

| | |
|---|---|
| DP | Dosierpumpe |
| B | Behälter |
| D | Dosiersystem |
| WA | Fahrzeugwaschanlage |
| bds | Behälterdatensatz |
| fs | digitaler Füllstandwert |
| FSS | analoger Füllstandsensor |
| p | digitaler Druckwert |
| DS | analoger Drucksensor |
| $\rho$ | digitaler Dichtewert |
| ist-fv | IST-Fördervolumen |
| ks | Kalibriersignale |
| V | Verfahren |
| a)-f) | Verfahrensschritte, insbesondere Einlesen, Ermitteln, Erfassen und Bereitstellen |
| uds | Umgebungsparameterdatensatz |
| sts | Steuersignale |
| L | Längenwert des Behälters |
| Br | Breitenwert des Behälters |
| K | Kennwert |
| AS | Ausgabeschnittstelle |
| RE | Recheneinheit |
| HMI | Mensch-Maschine-Schnittstelle |
| SPS | Steuerung, insbesondere speicherprogrammierbare Steuerung |
| MIX | Mischer |
| AG | Arbeitsaggregat |
| MA | Messanzeige mit Umformer |
| DL | Druckluft |
| LA | Lanze |

**Patentansprüche**

1. Computer-implementiertes Verfahren (V) zur Ermittlung eines IST-Fördervolumens (ist-fv) für eine Dosierpumpe (DP), die zur Förderung einer Substanz aus einem Behälter (B) zur Verwendung in einer Fahrzeugwaschanlage (WA) bestimmt ist, mit den folgenden Verfahrensschritten:

a) Einlesen eines Behälterdatensatzes (bds) für den Behälter (B), aus dem die Substanz mittels der Dosierpumpe (DP) gefördert werden soll, wobei der Behälterdatensatz (bds) ein elektronischer Datensatz ist, der für den Behälter (B) bereitgestellt wird, und wobei der Behälterdatensatz (bds) Information über die Bauform, Größe und/oder ein Aufnahmevolumen des Behälters (B) enthält;

b) Einlesen eines digitalen Füllstandwertes (fs), der einen in dem Behälter (B) mittels zumindest einem analogen Füllstandsensor (FSS) gemessenen Füllstand repräsentiert und/oder

c) Einlesen eines digitalen Druckwertes (p), der einen in dem Behälter (B) mittels zumindest einem analogen Drucksensor (DS) gemessenen Druck repräsentiert und Einlesen eines digitalen Dichtewertes (ρ) für die mit der Dosierpumpe (DP) zu fördernde Substanz;

d) Ermitteln und Ausgeben des IST-Fördervolumens (ist-fv), das von der Dosierpumpe (DP) tatsächlich gefördert worden ist, durch Anwenden einer ersten Funktion, *f1*, auf den in Schritt b) eingelesenen digitalen Füllstandwert (fs) und den in Schritt a) eingelesenen Behälterdatensatz (bds) und/oder durch Anwenden einer zweiten Funktion, *f2*, auf den in Schritt c) eingelesenen Druckwert (p) und den in Schritt c) eingelesenen Dichtewert (ρ) und den in Schritt a) eingelesenen Behälterdatensatz (bds).

2. Verfahren nach Patentanspruch 1, bei dem aus dem in Schritt d) ermittelten IST-Fördervolumen (ist-fv) und optional einem Umgebungsparameterdatensatz (uds) Steuersignale (sts) zur Ansteuerung der Dosierpumpe (DP) berechnet werden.

3. Verfahren nach einem der vorangehenden Patentansprüche, bei dem das Einlesen des digitalen Dichtewertes (ρ) für die mit der Dosierpumpe (DP) zu fördernde Substanz über das Einlesen eines Codes erfolgt.

4. Verfahren nach einem der vorangehenden Patentansprüche, bei dem das Einlesen des digitalen Dichtewertes (ρ) für die mit der Dosierpumpe (DP) zu fördernde Substanz durch eine interne Softwareroutine erfolgt, die dazu dient, den in Schritt b) eingelesenen Füllstandwert (fs) und die in Schritt c) erfassten Druckmessung und ein Signal eines weiteren Sensors zu referenzieren.

5. Verfahren nach einem der vorangehenden Patentansprüche, bei dem die erste Funktion *f1* das IST-Fördervolumen wie folgt berechnet ist-fv = {fs x L x Br} bei einem Behälter (B), der mit zumindest einem analogen Füllstandsensor (FSS) ausgebildet ist, wobei fs den eingelesenen digitalen Füllstandwert, L die Länge des Behälters (B) und Br die Breite des Behälters (B) bezeichnet, und/oder bei dem die zweite Funktion f2 das IST-Fördervolumen wie folgt berechnet ist-fv = {h x L x Br}, wobei $h = \frac{p}{\rho \, x \, g}$ bei einem Behälter (B), der mit zumindest einem analogen Drucksensor (DS) ausgebildet ist, wobei h die Füllhöhe, L die Länge und Br die Breite des Behälters (B) und ρ den gemessenen Druck, ρ der Dichtewert der Substanz und g die Erdbeschleunigung bezeichnet.

6. Verfahren nach einem der vorangehenden Patentansprüche, bei dem das Einlesen des Behälterdatensatzes (bds) in Schritt a) das Einlesen eines Längenwertes (L) und Breitenwertes (Br) für den Behälter (B) mit einer rechteckigen Grundfläche umfasst.

7. Verfahren nach einem der vorangehenden Patentansprüche 1 bis 4, bei dem das Einlesen des Behälterdatensatzes (bds) in Schritt a) das Einlesen eines Radiuswertes und optional eines Höhenwertes für den Behälter (B) mit einer runden Grundfläche umfasst.

8. Verfahren nach einem der vorangehenden Patentansprüche, bei dem ein geometrisches dreidimensionales Modell des Behälters (B) eingelesen wird, das eine Fläche des Behälters (B) über die Höhe definiert, so dass ein Volumen des Behälters in Abhängigkeit von der Höhe bereitgestellt werden kann.

9. Verfahren nach einem der vorangehenden Patentansprüche 1 oder 3 bis 8 in Verbindung mit dem Patentanspruch 2, bei dem die Steuersignale (sts) die Taktfrequenz eines Hubkolbens der Dosierpumpe (DP) steuern und/oder bei dem die Steuersignale (sts) das Soll-Fördervolumen steuern.

10. Verfahren nach einem der vorangehenden Patentansprüche, bei dem zum Einlesen des digitalen Druckwertes (p) in Schritt c) der Druck in dem Behälter (B) mit einem internen und direkten Messverfahren gemessen wird, bei dem der zumindest eine Drucksensor (DS) in dem Behälter (B) angeordnet ist, oder bei dem der Druck in dem Behälter (B) mit einem externen und indirekten Messverfahren gemessen wird, bei dem kein Drucksensor in dem Behälter (B) angeordnet ist, sondern bei dem die Messung indirekt und unter Verwendung einer Lanze (LA) zur Applikation von Druckluft (DL), die in den Behälter (B), insbesondere im Bereich des Behälterbodens, eingebracht wird.

11. Verfahren nach einem der vorangehenden Patentansprüche, bei dem die Dosierpumpe (DP) für einen Behälter (B) betrieben wird, der auswechselbar und/oder nachfüllbar ist und/oder der eine variable Größe aufweisen kann.

12. Verfahren nach einem der vorangehenden Patentansprüche, bei dem der Behälter (B) ein Vorratsbehälter mit einer verschließbaren Nachfüllöffnung ist, der in fluidmechanischer Verbindung zu einem Mischer (Mix) und/oder zu zumindest einem Arbeitsaggregat (AG) der Fahrzeugwaschanlage (WA) steht.

13. Verfahren nach einem der vorangehenden Patentansprüche, bei dem das in Schritt d) ermittelte IST-Fördervolumen (ist-fv) mit dem eingestellten SOLL-Fördervolumen auf Übereinstimmung verglichen wird und bei dem automatisch ein Kalibrierindikator berechnet wird, um ein Kalibriererfordernissignal auszugeben, falls der berechnete Kalibrierindikator einen vorkonfigurierbaren Schwellenwert übersteigt, und/oder um eine Fehlerbehebungsmaßnahme einzuleiten.

14. Verfahren nach einem der vorangehenden Patentansprüche, bei dem das Ermitteln des IST-Fördervolumens in Schritt d) zu zumindest zwei Messzeitpunkten erfolgt, insbesondere unmittelbar vor Beginn und nach Beenden von einer Fahrzeug-Wäsche zumindest eines Fahrzeugs, so dass auf die jeweils ermittelten IST-Fördervolumina, die jeweils einem Messzeitpunkt zugeordnet sind, eine Differenzbildung angewendet wird, die einen Volumenunterschied zwischen den beiden Messzeitpunkten repräsentiert.

15. Verfahren nach einem der vorangehenden Patentansprüche, bei dem der Behälterdatensatz (bds) in Schritt a) einmalig eingelesen wird und/oder bei dem der in Schritt b) gemessene Füllstand und/oder bei dem der in Schritt c) gemessene Druck und der in Schritt c) eingelesene Dichtewert in einem konfigurierbaren Messzeitintervall mehrfach gemessen und/oder eingelesen werden.

16. Verfahren nach einem der vorangehenden Patentansprüche, bei dem zusätzlich eine Anzahl von mit der Dosierpumpe (DP) ausgeführten Hüben erfasst wird und/oder die Hubanzahl in zeitlicher Zuordnung zu den gemessenen Messwerten gespeichert wird und bei der das ermittelte IST-Fördervolumen (ist-fv) pro Hub berechnet wird.

17. Verfahren nach einem der vorangehenden Patentansprüche, wobei das in Schritt d) ermittelte IST-Fördervolumen (ist-fv) zumindest unmittelbar vor Beginn und unmittelbar nach Beendigung eines Waschprogramms ermittelt wird, um einen durch das Waschprogramm verursachten Verbrauch der geförderten Substanz zu bestimmen.

18. Verfahren nach dem unmittelbar vorangehenden Patentanspruch, bei dem ein Kennwert (k) eingelesen wird, der dazu dient, das von der Fahrzeugwaschanlage ausgeführte Waschprogramm eindeutig zu identifizieren, um einen waschprogrammspezifischen Verbrauch pro Waschprogramm zu berechnen.

19. Verfahren nach einem der vorangehenden Patentansprüche, bei dem das in Schritt d) ermittelte IST-Fördervolumen (ist-fv) auf zugeordnete Weise mit einem Kennwert (k) zur Identifikation eines jeweils ausgeführten Waschprogramms der Fahrzeug-Wäsche gespeichert wird, wobei der Kennwert (k) die bei der Fahrzeug-Wäsche verwendeten Substanzen und/oder dessen Dauer indiziert.

20. Verwendung des Verfahrens nach einem der vorangehenden Patentansprüche 1 bis 19 zur automatischen Kalibrierung einer Dosierpumpe (DP), die mit einem Einstellmittel zur manuellen Einstellung eines SOLL-Fördervolumens pro Zeiteinheit ausgebildet ist, umfassend folgende Verfahrensschritte:

1) Erfassen eines an der Dosierpumpe (DP) eingestellten SOLL-Fördervolumens pro Zeiteinheit, das an dem Einstellmittel eingestellt worden ist;
2) Ermittlung des IST-Fördervolumens durch Ausführen des Verfahrens nach einem der vorangehenden Verfahrensansprüche;
3) Berechnen und Bereitstellen von Kalibriersignalen (ks) zur automatischen Kalibrierung der Dosierpumpe (DP) auf Basis einer berechneten Abweichung zwischen dem erfassten eingestellten SOLL-Fördervolumen und dem in Verfahrensschritt 2) ermittelten IST-Fördervolumen (ist-fv).

21. Recheneinheit (RE) zur Ermittlung eines IST-Fördervolumens für eine Dosierpumpe (DP), die zur Förderung einer Substanz aus einem Behälter (B) und zur Verwendung in einer Fahrzeugwaschanlage (WA) und zur Ausführung des Verfahrens nach einem der Patentansprüche 1 bis 19 bestimmt ist, mit:

- Einer ersten Einleseschnittstelle (S1) zum Einlesen eines Behälterdatensatzes (bds) für den Behälter (B), aus dem die Substanz mittels der Dosierpumpe (DP) gefördert werden soll, wobei der Behälterdatensatz (bds) ein elektronischer Datensatz ist, der für den Behälter (B) bereitgestellt wird, und wobei der Behälterdatensatz (bds) Information über die Bauform, Größe und/oder ein Aufnahmevolumen des Behälters (B) enthält;

- Einer zweiten Einleseschnittstelle (S2) zum Einlesen eines digitalen Füllstandwertes (fs), der einen in dem Behälter (B) mittels zumindest einem analogen Füllstandsensor (FSS) gemessenen Füllstand repräsentiert;

- alternativ oder kumulativ zur zweiten Einleseschnittstelle (S2) ist die Recheneinheit (RE) mit einer dritten Einleseschnittstelle (S3) zum Einlesen eines digitalen Druckwertes (p), der einen in dem Behälter (B) mittels zumindest einem analogen Drucksensor (DS) gemessenen Druck repräsentiert, ausgebildet und/oder mit einer vierten Einleseschnittstelle zum Einlesen eines Dichtewertes ($\rho$) für die mit der Dosierpumpe (DP) zu fördernde Substanz ausgebildet;

- wobei die Recheneinheit (RE) zum Ermitteln eines IST-Fördervolumens (ist-fv) bestimmt ist, das von der Dosierpumpe (DP) in einem Messzeitintervall tatsächlich gefördert worden ist, durch Anwenden einer ersten Funktion, *f1*, auf den mittels der zweiten Einleseschnittstelle (S2) eingelesenen digitalen Füllstandwert (fs) und den mittels der ersten Einleseschnittstelle (S1) eingelesenen Behälterdatensatz (bds) und/oder durch Anwenden einer zweiten Funktion, *f2*, auf den mittels der dritten Einleseschnittstelle (S3) eingelesenen Druckwert (p) und den mittels der vierten Einleseschnittstelle (S4) eingelesenen Dichtewert ($\rho$) und den eingelesenen Behälterdatensatz (bds).,

- wobei die Recheneinheit (RE) weiterhin eine Ausgabeschnittstelle (AS) umfasst, die zur Ausgabe des ermittelten IST-Fördervolumens (ist-fv) bestimmt ist.

22. Dosiersystem (D) für eine Fahrzeugwaschanlage (WA) mit einer Dosierpumpe (DP) und einer Recheneinheit (RE) gemäß dem unmittelbar vorangehenden Anspruch und dem Behälter (B) und einem Netzwerk zum Datenaustausch.

23. Dosiersystem (D) nach dem unmittelbar vorangehenden Anspruch, wobei das Dosiersystem und insbesondere die Recheneinheit (RE) mit einer Mensch-Maschine-Schnittstelle (HMI) ausgebildet ist.

24. Dosiersystem (D) nach dem unmittelbar vorangehenden Anspruch, wobei das Dosiersystem einen Signalgeber umfasst, der ausgebildet ist, ein Warnsignal auszugeben, wenn die Recheneinheit (RE) aus dem ermittelten IST-Fördervolumen (ist-fv) und einem eingelesenen Maximalfüllwert ein verbleibendes Restvolumen ermittelt hat, das eine vorkonfigurierbaren Schwellenwert unterschreitet oder überschreitet.

25. Fahrzeugwaschanlage (WA) mit einem Dosiersystem nach einem der Ansprüche 22 bis 24.

26. Computerprogramm, wobei das Computerprogramm in eine Speichereinheit einer Recheneinheit (RE) ladbar ist und Programmcodeabschnitte enthält, um die Recheneinheit (RE) zu veranlassen, das Verfahren zur Ermittlung eines IST-Fördervolumens (ist-fv) gemäß einem der Patentansprüche 1 bis 19 auszuführen, wenn das Computerprogramm in der Recheneinheit (RE) ausgeführt wird.

**Claims**

1. Computer-implemented method (V) for determining an ACTUAL delivery volume (ist-fv) for a dosing pump (DP) intended for delivering a substance from a container (B) for use in a vehicle washing system (WA), comprising the following method steps:

   a) Reading in a container data record (bds) for the container (B) from which the substance is to be delivered by means of the metering pump (DP), wherein the container data record (bds) is an electronic data record which is provided for the container (B), and wherein the container data record (bds) contains information about the design, size and/or a holding volume of the container (B);
   b) Reading in a digital fill level value (fs), which represents a fill level measured in the container (B) by means of at least one analog fill level sensor (FSS) and/or
   c) Reading in a digital pressure value (p), which represents a pressure measured in the container (B) by means of at least one analog pressure sensor (DS), and reading in a digital density value ($\rho$) for the substance to be delivered by the dosing pump (DP);
   d) Determining and outputting the ACTUAL delivery volume (ist-fv) actually delivered by the dosing pump (DP) by applying a first function, *f1*, to the digital fill level value (fs) read in in step b) and the container data record (bds) read in in step a) and/or by applying a second function, *f2*, to the digital pressure value (p) read in in step c) and the digital density value ($\rho$) read in in step c) and the container data set (bds) read in in step a).

2. Method according to claim 1, in which control signals (sts) for controlling the dosing pump (DP) are calculated from the ACTUAL delivery volume (ist-fv) determined in step d) and optionally an environmental parameter data set (uds).

3. Method according to any of the preceding claims, in which the digital density value ($\rho$) for the substance to be delivered with the dosing pump (DP) is read in by reading in a code.

4. Method according to any of the preceding patent claims, in which the digital density value ($\rho$) for the substance to be delivered with the dosing pump (DP) is read in by an internal software routine which serves to reference the level value (fs) read in in step b) and the pressure measurement recorded in step c) and a signal from a further sensor.

5. Method according to any of the preceding claims, in which the first function *f1* calculates the ACTUAL delivery volume as follows *ist-fv = {fs x L x Br}* in the case of a container (B) which is designed with at least one analog fill level sensor (FSS), where fs denotes the digita filll level value read in, L denotes the length of the container (B) and Br denotes the width of the container (B), and/or in which the second function f2 calculates the ACTUAL delivery volume as follows: *ist-fv = {h x L x Br}*, where $h = \frac{p}{\rho \times g}$ for a container (B) designed with at least one analog fill pressure sensor (DS), where h is the filling height, L the length and Br the width of the container (B) and $\rho$ the measured pressure, $\rho$ is the density value of the substance and g is the acceleration due to gravity.

6. Method according to any of the preceding claims, in which the reading in of the container data record (bds) in step a) comprises the reading in of a length value (L) and width value (Br) for the container (B) having a rectangular base area.

7. Method according to any one of the preceding claims 1 to 4, wherein reading in the container data record (bds) in step a) comprises reading in a radius value and optionally a height value for the container (B) having a circular base.

8. Method according to any of the preceding claims, in which a geometric three-dimensional model of the container (B) is read in, which defines an area of the container (B) over the height, so that a volume of the container can be provided as a function of the height.

9. Method according to any of the preceding patent claims 1 or 3 to 8 in conjunction with patent claim 2, in which the control signals (sts) control the cycle frequency of a reciprocating piston of the metering pump (DP) and/or in which the control signals (sts) control the target delivery volume.

10. Method according to any of the preceding claims, in which, for reading in the digital pressure value (p) in step c), the pressure in the container (B) is measured using an internal and direct measuring method, in which the at least one pressure sensor (DS) is arranged in the container (B), or in which the pressure in the container (B) is measured using an external and indirect measuring method, in which no pressure sensor is arranged in the container (B), but in which the measurement is carried out indirectly and using a lance (LA) for applying compressed air (DL), which is introduced into the container (B), in particular in the region of the container base.

11. Method according to any of the preceding claims, in which the dosing pump (DP) is operated for a container (B) which is replaceable and/or refillable and/or which can have a variable size.

12. Method according to any of the preceding patent claims, in which the container (B) is a storage container with a closable refill opening, which is in fluid-mechanical connection to a mixer (Mix) and/or to at least one working unit (AG) of the vehicle washing system (WA).

13. Method according to any of the preceding patent claims, in which the ACTUAL delivery volume (ist-fv) determined in step d) is compared with the set TARGET delivery volume for conformity and in which a calibration indicator is automatically calculated in order to output a calibration request signal if the calculated calibration indicator exceeds a preconfigurable threshold value and/or in order to initiate an error correction measure.

14. Method according to any of the preceding patent claims, in which the determination of the ACTUAL delivery volume in step d) is carried out at at least two measurement times, in particular immediately before the start and after the end of a vehicle wash of at least one vehicle, so that a difference formation representing a volume difference between the two measurement times is applied to the respectively determined ACTUAL delivery volumes, which are respectively assigned to a measurement time.

15. Method according to any of the preceding claims, in which the container data record (bds) is read in once in step a) and/or in which the digital fill level measured in step b) and/or in which the digital pressure measured in step c) and the digital density value read in in step c ) are measured and/or read in several times in a configurable measuring time interval.

16. Method according to any of the preceding patent claims, in which additionally a number of strokes carried out with the dosing pump (DP) is recorded and/or the number of strokes is stored in temporal assignment to the measured values and in which the determined ACTUAL delivery volume (ist-fv) per stroke is calculated.

17. Method according to any of the preceding claims, wherein the ACTUAL delivery volume (ist-fv) determined in step d) is determined at least immediately before the start and immediately after the end of a washing program in order to determine a consumption of the conveyed substance caused by the washing program.

18. Method according to the immediately preceding patent claim, in which a characteristic value (k) is read in, which serves to uniquely identify the washing program carried out by the vehicle washing system in order to calculate a washing program-specific consumption per washing program.

19. Method according to any of the preceding claims, in which the ACTUAL delivery volume (ist-fv) determined in step d) is stored in an associated manner with a characteristic value (k) for identifying a respectively executed washing program of the vehicle wash, the characteristic value (k) indicating the substances used in the vehicle wash and/or its duration.

20. Use of the method according to any of the preceding patent claims for automatically calibrating a dosing pump (DP) which is designed with an adjustment means for manually adjusting a target delivery volume per unit of time, comprising the following method steps:

1) Recording of a SET delivery volume per time unit set on the dosing pump (DP), which has been set on the setting device;
2) Determining the ACTUAL delivery volume by carrying out the method according to any one of the preceding method claims;
3) Calculation and provision of calibration signals (ks) for automatic calibration of the dosing pump (DP) on the basis of a calculated deviation between the detected set target delivery volume and the ACTUAL delivery volume (ist-fv) determined in process step 2).

21. A computing unit (RE) for determining an ACTUAL delivery volume for a metering pump (DP) intended for delivering a substance from a container (B) and for use in a vehicle washing system (WA) and for carrying out the method according to any one of claims 1 to 19, comprising:

- A first read-in interface (S1) for reading in a container data set (bds) for the container (B) from which the substance is to be delivered by means of the metering pump (DP), wherein the container data set (bds) is an electronic data set which is provided for the container (B), and wherein the container data set (bds) contains information about the design, size and/or a holding volume of the container (B);
- A second read-in interface (S2) for reading in a digital fill level value (fs), which represents a fill level measured in the container (B) by means of at least one analog fill level sensor (FSS);
- alternatively or cumulatively to the second read-in interface (S2), the computing unit (RE) is designed with a third read-in interface (S3) for reading in a digital pressure value (p), which represents a pressure measured in the container (B) by means of at least one analog pressure sensor (DS), and/or is designed with a fourth read-in interface for reading in a density value ($\rho$) for the substance to be delivered by the dosing pump (DP);
- the calculation unit (RE) being intended for determining an ACTUAL delivery volume (ist-fv) which has actually been delivered by the metering pump (DP) in a measurement time interval, by applying a first function, $f1$, to the digital fill level value (fs) read in via the second read-in interface (S2) and the container data record (bds) read in via the first read-in interface (S1) and/or by applying a second function, $f2$, to the digital pressure value (p) read in via the third read-in interface (S3) and the density value ($\rho$) read in via the fourth read-in interface (S4) and the container data set (bds) read in.,
- wherein the computing unit (RE) further comprises an output interface (AS) which is intended for outputting the determined ACTUAL delivery volume (ist-fv).

22. Dosing system (D) for a vehicle washing system (WA) with a dosing pump (DP) and a computing unit (RE) according to the immediately preceding claim and the container (B) and a network for data exchange.

23. Dosing system (D) according to the immediately preceding claim, wherein the dosing system and in particular the computing unit (RE) is designed with a human-machine interface (HMI).

24. Dosing system (D) according to the immediately preceding claim, wherein the dosing system comprises a signal transmitter which is designed to emit a warning signal when the computing unit (RE) has determined a remaining residual volume which falls below or exceeds a preconfigurable threshold value from the determined ACTUAL delivery volume (ist-fv) and a maximum filling value which has been read in.

25. Vehicle washing system (WA) with a dosing system according to any of the claims 22 to 24.

26. Computer program, wherein the computer program is loadable into a memory unit of a computing unit (RE) and includes program code portions for causing the computing unit (RE) to execute the method for determining an ACTUAL delivery volume (ist-fv) according to any one of claims 1 to 19 when the computer program is executed in the computing unit (RE).

**Revendications**

1. Procédé (V) mis en oeuvre par ordinateur pour déterminer un volume de refoulement réel (ist-fv) pour une pompe de dosage (DP), qui est destinée à refouler une substance à partir d'un récipient (B) pour une utilisation dans une installation de lavage de véhicules (WA), comprenant les étapes de procédé suivantes :

   a) la lecture d'un ensemble de données de récipient (bds) pour le récipient (B) à partir duquel la substance doit être délivrée au moyen de la pompe de dosage (DP), l'ensemble de données de récipient (bds) étant un ensemble de données électroniques qui est mis à disposition pour le récipient (B), et l'ensemble de données de récipient (bds) contenant des informations sur la forme de construction, la taille et/ou un volume de réception du récipient (B) ;
   b) la lecture d'une valeur de niveau numérique (fs) qui représente un niveau mesuré dans le récipient (B) au moyen d'au moins un capteur de niveau analogique (FSS) et/ou
   c) la lecture d'une valeur de pression numérique (p) qui représente une pression mesurée dans le récipient (B) au moyen d'au moins un capteur de pression analogique (DS) et la lecture d'une valeur de densité numérique ($\rho$) pour la substance à transporter avec la pompe de dosage (DP) ;
   d) Déterminer et émettre le volume de refoulement réel (ist-fv) qui a été effectivement refoulé par la pompe doseuse (DP), en appliquant une première fonction, f1, à la valeur de niveau numérique (fs) lue à l'étape b) et à l'ensemble de données de récipient (bds) lu à l'étape a) et/ou en appliquant une deuxième fonction, f2, sur la valeur de pression (p) lue à l'étape c) et sur la valeur de densité ($\rho$) lue à l'étape c) et sur l'ensemble de données du récipient (bds) lu à l'étape a).

2. Procédé selon la revendication 1, dans lequel des signaux de commande (sts) pour la commande de la pompe de dosage (DP) sont calculés à partir du volume de refoulement réel (ist-fv) déterminé à l'étape d) et, en option, d'un ensemble de données de paramètres environnementaux (uds).

3. Procédé selon l'une des revendications précédentes, dans lequel la lecture de la valeur numérique de densité ($\rho$) pour la substance à transporter avec la pompe doseuse (DP) s'effectue par la lecture d'un code.

4. Procédé selon l'une des revendications précédentes, dans lequel la lecture de la valeur numérique de densité ($\rho$) pour la substance à refouler avec la pompe de dosage (DP) est effectuée par une routine logicielle interne qui sert à référencer la valeur de niveau (fs) lue à l'étape b) et la mesure de pression enregistrée à l'étape c) et un signal d'un autre capteur.

5. Procédé selon l'une des revendications précédentes, dans lequel la première fonction *f1* calcule le volume refoulement réel comme *ist-fv = {fs x L x Br}* dans le cas d'un récipient (B) qui est réalisé avec au moins un capteur de niveau analogique (FSS), où fs désigne la valeur de niveau numérique lue, L la longueur du récipient (B) et Br la largeur du récipient (B), et/ou dans lequel la deuxième fonction *f2* le volume de refoulement réel est calculé comme suit ist-*fv = {h x L x Br}*, où $h = \dfrac{p}{\rho \times g}$ dans le cas d'un récipient (B) formé avec au moins un capteur de pression analogique (DS), où h est la hauteur de remplissage, L la longueur et Br la largeur du récipient (B) et $\rho$ la pression mesurée, $\rho$ la valeur de densité de la substance et g l'accélération de la pesanteur.

6. Procédé selon l'une quelconque des revendications précédentes, dans lequel la lecture de l'ensemble de données de récipient (bds) à l'étape a) comprend la lecture d'une valeur de longueur (L) et d'une valeur de largeur (Br) pour le récipient (B) ayant une surface de base rectangulaire.

7. Procédé selon l'une quelconque des revendications 1 à 4 précédentes, dans lequel la lecture de l'ensemble de données de récipient (bds) à l'étape a) comprend la lecture d'une valeur de rayon et éventuellement d'une valeur de hauteur pour le récipient (B) ayant une surface de base ronde.

8. Procédé selon l'une quelconque des revendications précédentes, dans lequel lit un modèle géométrique tridimensionnel du récipient (B), qui définit une surface du récipient (B) en fonction de la hauteur, de sorte qu'un volume du récipient peut être fourni en fonction de la hauteur.

9. Procédé selon l'une des revendications précédentes 1 ou 3 à 8 en liaison avec la revendication 2, dans lequel les signaux de commande (sts) commandent la fréquence de cycle d'un piston alternatif de la pompe de dosage (DP) et/ou dans lequel les signaux de commande (sts) commandent le volume de refoulement de consigne.

10. Procédé selon l'une des revendications précédentes, dans lequel, pour lire la valeur de pression numérique (p) à l'étape c), la pression dans le récipient (B) est mesurée avec un procédé de mesure interne et direct, dans lequel le au moins un capteur de pression (DS) est disposé dans le récipient (B), ou bien dans lequel la pression dans le récipient (B) est mesurée par un procédé de mesure externe et indirect, dans lequel aucun capteur de pression n'est disposé dans le récipient (B), mais dans lequel la mesure est effectuée indirectement et en utilisant une lance (LA) pour l'application d'air comprimé (DL), qui est introduit dans le récipient (B), en particulier dans la zone du fond du récipient.

11. Procédé selon l'une des revendications précédentes, dans lequel la pompe de dosage (DP) est actionnée pour un récipient (B) qui est interchangeable et/ou rechargeable et/ou qui peut présenter une taille variable.

12. Procédé selon l'une des revendications précédentes, dans lequel le réservoir (B) est un réservoir de stockage avec une ouverture de remplissage pouvant être fermée, qui est en liaison fluidique avec un mélangeur (Mix) et/ou avec au moins un groupe de travail (AG) de l'installation de lavage de véhicules (WA).

13. Procédé selon l'une des revendications précédentes, dans lequel le volume de refoulement réel (ist-fv) déterminé à l'étape d) est comparé au volume de refoulement de consigne réglé pour déterminer s'il correspond et dans lequel un indicateur d'étalonnage est calculé automatiquement pour émettre un signal de demande d'étalonnage si l'indicateur d'étalonnage calculé dépasse une valeur seuil préconfigurable et/ou pour déclencher une mesure de correction d'erreur.

14. Procédé selon l'une des revendications précédentes, dans lequel la détermination du volume de refoulement réel à l'étape d) s'effectue à au moins deux moments de mesure, en particulier immédiatement avant le début et après la fin d'un lavage d'au moins un véhicule, de sorte que l'on applique aux volumes de refoulement réels respectivement déterminés, qui sont respectivement associés à un moment de mesure, une formation de différence qui représente une différence de volume entre les deux moments de mesure.

15. Procédé selon l'une des revendications précédentes, dans lequel le jeu de données du récipient (bds) est lu une fois à l'étape a) et/ou dans lequel le niveau de remplissage mesuré à l'étape b) et/ou dans lequel la pression mesurée à l'étape c) et la valeur de densité lue à l'étape c ) sont mesurées et/ou lues plusieurs fois dans un intervalle de temps de mesure configurable.

16. Procédé selon l'une des revendications précédentes, dans lequel on enregistre en outre un nombre de courses effectuées avec la pompe de dosage (DP) et/ou on mémorise le nombre de courses en association temporelle avec les valeurs de mesure mesurées et dans lequel on calcule le volume de refoulement réel (ist-fv) déterminé par course.

17. Procédé selon l'une des revendications précédentes, dans lequel le volume de refoulement réel (ist-fv) déterminé à l'étape d) est déterminé au moins immédiatement avant le début et immédiatement après la fin d'un programme de lavage, afin de déterminer une consommation de la substance transportée provoquée par le programme de lavage.

18. Procédé selon la revendication immédiatement précédente, dans lequel on lit une valeur caractéristique (k) qui sert à identifier de manière univoque le programme de lavage exécuté par l'installation de lavage de véhicules, afin de calculer une consommation spécifique au programme de lavage par programme de lavage.

19. Procédé selon l'une quelconque des revendications précédentes, dans lequel le volume de refoulement réel (ist-fv) déterminé à l'étape d) est mémorisé de manière associée à une valeur caractéristique (k) pour identifier un programme de lavage du véhicule respectivement exécuté, ladite valeur caractéristique (k) indiquant les substances utilisées dans le lavage du véhicule et/ou sa durée.

20. Utilisation du procédé selon l'une des revendications précédentes pour le calibrage automatique d'une pompe de dosage (DP), qui est réalisée avec un moyen de réglage pour le réglage manuel d'un volume de refoulement de consigne par unité de temps, comprenant les étapes de procédé suivantes :

1) Saisie d'un volume de refoulement de consigne par unité de temps réglé sur la pompe doseuse (DP), qui a été réglé sur le moyen de réglage ;
2) Détermination du volume de refoulement réel en exécutant le procédé selon l'une des revendications de procédé précédentes ;

3) calculer et mettre à disposition des signaux de calibrage (ks) pour le calibrage automatique de la pompe doseuse (DP) sur la base d'un écart calculé entre le volume de refoulement de consigne réglé saisi et le volume de refoulement réel (ist-fv) déterminé dans l'étape 2) du procédé.

21. Unité de calcul (RE) pour déterminer un volume de refoulement réel pour une pompe de dosage (DP), qui est destinée à refouler une substance à partir d'un récipient (B) et à être utilisée dans une installation de lavage de véhicules (WA) et pour la mise en oeuvre du procédé selon l'une des Revendications 1 à 19, avec :

    - une première interface de lecture (S1) pour lire un jeu de données de récipient (bds) pour le récipient (B) à partir duquel la substance doit être transportée au moyen de la pompe de dosage (DP), le jeu de données de récipient (bds) étant un jeu de données électronique qui est mis à disposition pour le récipient (B), et le jeu de données de récipient (bds) contenant des informations sur la forme de construction, la taille et/ou un volume de réception du récipient (B) ;
    - une deuxième interface de lecture (S2) pour la lecture d'une valeur de niveau numérique (fs), qui représente un niveau mesuré dans le récipient (B) au moyen d'au moins un capteur de niveau analogique (FSS) ;
    - en alternative ou en cumul avec la deuxième interface de lecture (S2), l'unité de calcul (RE) est réalisée avec une troisième interface de lecture (S3) pour la lecture d'une valeur de pression numérique (p), qui représente une pression mesurée dans le récipient (B) au moyen d'au moins un capteur de pression analogique (DS), et/ou avec une quatrième interface de lecture pour la lecture d'une valeur de densité ($\rho$) pour la substance à transporter avec la pompe de dosage (DP) ;
    - l'unité de calcul (RE) étant destinée à déterminer un volume de refoulement réel (ist-fv) qui a été effectivement refoulé par la pompe de dosage (DP) dans un intervalle de temps de mesure, en appliquant une première fonction, f1, à la valeur de niveau numérique (fs) lue au moyen de la deuxième interface de lecture (S2) et au jeu de données de récipient (bds) lu au moyen de la première interface de lecture (S1) et/ou en appliquant une deuxième fonction, f2, à la valeur de pression (p) lue au moyen de la troisième interface de lecture (S3) et à la valeur de densité ($\rho$) lue au moyen de la quatrième interface de lecture (S4) et au jeu de données de récipient (bds) lu.,
    - l'unité de calcul (RE) comprenant en outre une interface de sortie (AS) qui est destinée à la sortie du volume de refoulement réel (ist-fv) déterminé.

22. Système de dosage (D) pour une installation de lavage de véhicules (WA) comprenant une pompe de dosage (DP) et une unité de calcul (RE) selon la revendication immédiatement précédente et le réservoir (B) et un réseau pour l'échange de données.

23. Système de dosage (D) selon la revendication immédiatement précédente, le système de dosage et en particulier l'unité de calcul (RE) étant réalisés avec une interface homme-machine (HMI).

24. Système de dosage (D) selon la revendication immédiatement précédente, le système de dosage comprenant un générateur de signaux qui est conçu pour émettre un signal d'avertissement lorsque l'unité de calcul (RE) a déterminé, à partir du volume de refoulement réel déterminé (ist-fv) et d'une valeur de remplissage maximale lue, un volume résiduel restant qui est inférieur ou supérieur à une valeur seuil préconfigurable.

25. Installation de lavage de véhicules (WA) avec un système de dosage selon l'une des revendications 22 à 24 .

26. Programme informatique, le programme informatique pouvant être chargé dans une unité de mémoire d'une unité de calcul (RE) et comprenant des sections de code de programme pour amener l'unité de calcul (RE) à exécuter le procédé de détermination d'un volume de refoulement réel (ist-fv) selon l'une quelconque des revendications 1 à 19 du brevet lorsque le programme informatique est exécuté dans l'unité de calcul (RE).

FIG. 1

RE

S1    S2    S3    S4    AS

FIG. 2

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019162226 A1
- DE 202012103143 U1

- EP 2885169 B1